# EUROPÄISCHE PATENTSCHRIFT

(11) **EP 1 668 090 B1**
(45) Veröffentlichungstag und Bekanntmachung des Hinweises auf die Patenterteilung: **08.09.2010**
(21) Anmeldenummer: 04765536.0
(22) Anmeldetag: 23.09.2004
(51) Int. Cl.: C09J 175/08, C08G 18/10, C08G 18/71, C08K 3/00, C08K 3/26

(54) **KOHÄSIONSVERMINDERTE BINDEMITTEL, DEREN HERSTELLUNG UND VERWENDUNG IN ABLÖSBAREN MONTAGEKLEBERN**
COHESION-REDUCED BINDER PRODUCTION AND USE THEREOF IN DETACHABLE ASSEMBLY ADHESIVES
LIANTS À COHESION DIMINUEE, LEUR PRODUCTION ET LEUR UTILISATION DANS DES COLLES DE FIXATION DETACHABLES

(30) Priorität: 01.10.2003 DE 10345718
(43) Veröffentlichungstag der Anmeldung: 14.06.2006
(73) Patentinhaber: Henkel AG & Co. KGaA, 40589 Düsseldorf (DE)
(72) Erfinder: MAJOLO, Martin, 41812 Erkelenz (DE); BACHON, Thomas, 40597 Düsseldorf (DE); BECK, Horst, 41470 Neuss (DE); OETZMANN, Dieter, 40599 Düsseldorf (DE); LAMBERTZ, Jennifer, 51371 Leverkusen (DE)
(86) Internationale Anmeldenummer: PCT/EP2004/010678
(87) Internationale Veröffentlichungsnummer: WO 2005/033241

(56) Entgegenhaltungen:
- EP-A- 1 201 703
- WO-A-99/48942
- WO-A-02/068501
- US-A- 6 121 354

## Beschreibung

Die vorliegende Erfindung betrifft polyurethanhaltige Bindemittel mit verringerter Kohäsion, deren Herstellung und deren Verwendung in Montageklebern. Die in den beschriebenen Bindemitteln enthaltenen Polyurethane weisen Silylgruppen auf, die bei Feuchtigkeitszutritt unter Molekulargewichtserhöhung abbinden.

Der Einsatz von Klebstoffen im Heimwerkerbereich verdrängt in zunehmendem Maße mechanische Befestigungsmittel. Dies geschieht insbesondere dort, wo die Verbindung zweier Werkstücke nur statischen Belastungen oder moderaten mechanischen Wechselbelastungen ausgesetzt ist. Der Anwender verbindet mit dem Einsatz von Montageklebern insbesondere eine Befestigungsform, die im Hinblick auf den Untergrund auf dem die Befestigung vorgenommen werden soll zerstörungsfrei abläuft. Besonders geschätzt werden daher die "werkzeuglose", schnelle Anwendung und die nahezu unsichtbare Befestigung.

Besonders das Anbringen von Objekten auf Fußböden, an Wänden oder Decken wird durch Montagekleber erleichtert, da das zerstörungsfreie Anbringen von Objekten beispielsweise das Aufspüren von Leitungselementen für Strom, Gas oder Wasser unter Putz an der entsprechenden Stelle überflüssig macht und dabei die Gefahr einer Zerstörung derartiger Leitungen mit den häufig hohen Folgekosten eines derartigen Schadens ausschließt. Darüber hinaus vereinfacht der Einsatz von Montageklebern die Befestigung von Gegenständen in Ecken erheblich, da hier mechanische Befestigungselemente oft nur unter erheblichen Schwierigkeiten anzubringen sind.

Grundsätzlich bietet also die Verwendung von Montageklebern eine Reihe von Vorteilen gegenüber konventionellen mechanischen Befestigungsmethoden (Nagel, Schraube, System Schraube/Dübel), die von einer zunehmenden Zahl von Anwendern in Industrie, Handwerk sowie insbesondere im Heimwerkerbereich erkannt und geschätzt werden.

Moderne Montagekleber weisen mittlerweile eine ausreichend hohe Adhäsionskraft zu verschiedensten Untergründen sowie eine ausgezeichnete Kohäsion auf. Die Kombination beider Faktoren trägt dazu bei, dass mit Hilfe von Montageklebem auch schwere Gegenstände befestigt werden können bzw. Verklebungen vorgenommen werden können, die dauerhaft auch senkrecht zur Verklebungsfläche belastet werden können. Während der Anwender diese Verbesserung der Klebkraft hinsichtlich der erweiterten Befestigungsmöglichkeiten durchaus zu schätzen weiß, ergeben sich hinsichtlich der Ablösung der mittels solchen Montageklebem befestigten Gegenstände jedoch verschiedentlich Probleme. Generell ist bei Montageklebern der neusten Generation zu beobachten, dass aufgrund der ausgezeichneten Adhäsions- und Kohäsionskräfte eine Belastung der Verklebung weder zu Adhäsions- noch zu Kohäsionsbruch führt, sondern Substratbruch beobachtet wird. Insbesondere das Ablösen von temporär befestigten Gegenständen kann aufgrund der ausgezeichneten Haftungseigenschaften moderner Montagekleber daher große Schwierigkeiten bereiten und führt oft zu einer Beschädigung des verklebten Substrats.

Um die Ablösbarkeit eines mittels eines Montageklebers verklebten Substrats zu erleichtern wurde verschiedentlich versucht, die Klebkraft (Adhäsion) des Montageklebers soweit herunter zu setzen, dass beim Versuch, das Substrat anzulösen, kein Substratbruch auftritt, das Substrat also unbeschädigt bleibt. Nachteilig wirkt sich bei dieser Vorgehensweise jedoch aus, dass aufgrund der Schwächung der Klebkraft (Adhäsion) natürlich auch die Belastbarkeit der mit einem solchen Montagekleber durchgeführten Verklebungen stark abnimmt. Derartig abgeschwächte Klebeverbindungen erfüllen jedoch nicht mehr die Erwartungen des Verbrauchers hinsichtlich der Belastbarkeit der Klebeverbindung. Darüber hinaus variiert die Adhäsion von Substrat zu Substrat, so dass eine Schwächung der Adhäsionskräfte insgesamt den Klebstoff hinsichtlich seiner Haftungseigenschaften unberechenbar macht.

Es bestand daher ein Bedürfnis nach Montageklebstoffen, die eine ausgezeichnete Adhäsion zu einer Vielzahl von Substratoberflächen aufweisen und eine gute Kohäsion zeigen. Darüber hinaus bestand ein Bedürfnis nach Montageklebstoffen, die eine ausgezeichnete Adhäsion zu einer Vielzahl von Substratoberflächen aufweisen und eine ausgezeichnete Kohäsion zeigen, wobei die mit einem solchen Montagekleber vorgenommenen Verklebungen vom Anwender in einfacher Weise wieder gelöst werden können, ohne das Substrat zu beschädigen bzw. mehr als vermeidbar zu beschädigen.

Polyurethane haben als vielseitig verwendbare Kunststoffe insbesondere durch ihren Einsatz in Oberflächenbeschichtungsmitteln, Klebstoffen und in der Dichtungstechnologie Einzug in viele Technologiebereiche gehalten. Besonderes Interesse gilt dabei den Polyurethanen, die über reaktive Endgruppen verfügen, insbesondere über Endgruppen, die mit Wasser reagieren können. Diese Form der Reaktivität erlaubt es, die reaktiven Polyurethane in verarbeitbarem Zustand (in der Regel flüssig bis hochviskos) in der gewünschten Form an den gewünschten Ort zu bringen und durch die Zugabe von Wasser oder sonstigen mit den Endgruppen reaktiven Verbindungen (Härter, beispielsweise bei 2K-Systemen) auszuhärten. Die Zugabe des Härters erfolgt dabei in der Regel vor der Verarbeitung, wobei dem Verarbeiter nach der Härterzugabe nur noch eine begrenzte Verarbeitungszeit zur Verfügung steht.

Es ist jedoch ebenfalls möglich, Polyurethane mit reaktiven Endgruppen ohne Zugabe von Härtern alleine durch die Reaktion mit Luftfeuchtigkeit auszuhärten (1K-Systeme). Solche Systeme weisen gegenüber den 2K-Systemen in der Regel den Vorteil auf, dass für den Anwender das oft lästige Mischen der häufig viskosen Komponenten vor der Anwendung entfällt.

Zu den üblicherweise in 1K- oder 2K-Systemen eingesetzten Polyurethanen mit reaktiven Endgruppen zählen beispielsweise die Polyurethane mit NCO-Endgruppen. Solche Polyurethane härten bei geeigneter Funktionalität bereits unter Einfluss von Luftfeuchtigkeit aus. Unter bestimmten Umständen, insbesondere bei Anwesenheit von Wasser (beispielsweise auf feuchten Oberflächen), kann es bei der Anwendung von Polyurethanen mit NCO-Endgruppen zur Entwicklung von Kohlendioxid kommen, was beispielsweise nachteilige Effekte auf die Oberflächenstruktur haben kann. Weiterhin haften solche Polyurethane häufig nicht auf glatten, inerten Oberflächen, beispielsweise auf Oberflächen aus Glas, Keramik, Metall und dergleichen, was in manchen Fällen die Verwendung eines Primers vor Auftrag des Polyurethans erforderlich macht oder die Verwendung eines Polyurethans zum Versiegeln, Verbinden oder Abdichten einer Oberfläche aus diesen Materialien unmöglich macht. Um hier Abhilfe zu schaffen, d.h., um eine feste und dauerhafte Verbindung von Polyurethan und beispielsweise den oben genannten Oberflächen zu ermöglichen, wurde vorgeschlagen, als reaktive Endgruppe beispielsweise eine Alkoxysilangruppe in das Polyurethan einzuführen.

Die EP 0 342 411 A2 beschreibt eine Ein-Komponenten Form- und Dichtungsmasse auf Basis von Präpolymeren, welche Silyl-Endgruppen mit mindestens einem hydrolysierbaren Substituenten am Si-Atom enthalten, metallorganische Zinnverbindungen als Katalysator sowie anorganische Füllstoffe, wobei die beschriebene Mischung ein Isocyanat und/oder ein Carbonsäurechlorid in einer Menge von 0,01 bis 1 Gew.-% als Stabilisator enthält. Die Druckschrift enthält keine Informationen über die Verwendung der beschriebenen Zusammensetzung als Klebstoff sowie die Adhäsion und Kohäsion der beschriebenen Zusammensetzung im Rahmen einer derartigen Verwendung.

Bei allen feuchtigkeitshärtenden Polyurethanen oder solche Polyurethane enthaltenden Zubereitungen (Systeme), insbesondere jedoch bei den siliziumhaltigen Systemen, wirkt sich in der Regel nachteilig aus, dass die Systeme nach der Verarbeitung durch den Aushärtvorgang verspröden und damit einen großen Teil ihrer Elastizität verlieren bzw, geringe Weiterreißfestigkeiten zeigen. Der Elastizitätsverlust tritt insbesondere häufig in der Kälte auf, bei Abkühlung verlieren die bekannten Systeme häufig ihre Rückstellfähigkeit und Flexibilität. Der Versuch die Elastizität und Flexibilität der ausgehärteten Systeme zu verbessern führt jedoch oft zu einer Verschlechterung anderer Materialeigenschaften, beispielsweise einer höheren Klebrigkeit der Oberfläche, oder die Systeme haben vor der Verarbeitung eine so hohe Viskosität, dass beispielsweise Lösemittel eingesetzt werden müssen, um die Verarbeitbarkeit zu gewährleisten. Ebenfalls häufig beobachtet wird eine Verringerung der Lagerstabilität der Systeme. Sowohl die Verschlechterung wesentlicher Material- oder Lagereigenschaften als auch die Verwendung von Lösemitteln ist ökonomisch und ökologisch nicht sinnvoll.

Die WO 99/48942 beschreibt ein Polyurethan, herstellbar durch Umsetzung von mindestens zwei Komponenten, nämlich einem Polyisocyanat und einem Polyol. Als Polyol wird beispielsweise ein Polyether mit einem Molekulargewicht von mindestens 4000 und einer Polydispersität von weniger als 1,5 eingesetzt.

Der vorliegenden Erfindung lag nun die Aufgabe zugrunde eine Zusammensetzung zur Verfügung zu stellen, welche die oben genannten Bedürfnisse erfüllt. Weiterhin lag der vorliegenden Erfindung die Aufgabe zugrunde, einer Zusammensetzung zur Verfügung zu stellen, welche die Nachteile der aus dem Stand der Technik bekannten Zusammensetzungen nicht aufweist. Insbesondere lag der vorliegenden Erfindung die Aufgabe zugrunde, eine Zusammensetzung zur Verfügung zu stellen, welche sich zum Einsatz als Montagekleber eignet, wobei die Klebekraft eines derartigen Klebers den aus dem Stand der Technik bekannten Anforderungen gewachsen ist, während der Kleber eine besonders gute Wiederablösbarkeit zeigt.

Die oben genannten Aufgaben, sowie weitere Aufgaben wie sie sich aus den nachfolgend beschriebenen Anwendungen ergeben, werden durch Zusammensetzungen gelöst, wie sie Gegenstand des Patentanspruchs 1 sowie der Neben- und Unteransprüche sind.

Gegenstand der vorliegenden Erfindung ist daher eine Zusammensetzung, mindestens enthaltend ein Bindemittel und einen Füllstoff, wobei ein Bindemittel eingesetzt wird, das durch Umsetzung von mindestens zwei Komponenten B und C herstellbar ist, wobei
a) als Komponente B ein Polyol oder ein Gemisch aus zwei oder mehr Polyolen und
b) als Komponente C eine Verbindung der allgemeinen Formel II 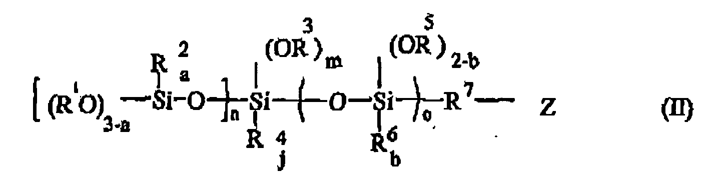 worin die Reste R¹ bis R⁶ jeweils unabhängig voneinander für einen linearen oder verzweigten, gesättigten oder ungesättigten Kohlenwasserstoffrest mit 1 bis 24 C-Atomen, einen gesättigten oder ungesättigten Cycloalkylrest mit 4 bis 24 C-Atomen oder einen Arylrest mit 6 bis 24 C-Atomen stehen, n, m und j jeweils für eine ganze Zahl von 0 bis 3 stehen, wobei m+n+j=3, a für eine ganze Zahl von 0 bis 3, b für eine ganze Zahl von 0 bis 2 und c für eine Zahl von 0 bis 8 steht, R⁷ für einen gegebenenfalls substituierten Alkylenrest mit 1 bis 44 C-Atomen, einen gegebenenfalls substituierten Cycloalkenylrest mit 6 bis 24 C-Atomen oder einen gegebenenfalls substituierten Arylenrest mit 6 bis 24 C-Atomen und Z für NCO steht, eingesetzt wird, die Menge an Bindemittel in der gesamten Zusammensetzung weniger als 15 Gew.-% beträgt, die Menge an Füllstoffen in der gesamten Zusammensetzung mehr als 20 und weniger als 80 Gew.-% oder mehr als 80 bis 95 Gew.-% beträgt und das Gewichtsverhältnis von Füllstoff zu Bindemittel mehr als 1,44 : 1 beträgt.

Ein weiterer Gegenstand der vorliegenden Erfindung betrifft eine Zusammensetzung, mindestens enthaltend ein Bindemittel und einen Füllstoff, wobei ein Bindemittel eingesetzt wird, das durch Umsetzung von mindestens zwei Komponenten B und C herstellbar ist, wobei
a) als Komponente B ein Polyol oder ein Gemisch aus zwei oder mehr Polyolen und
b) als Komponente C eine Verbindung der allgemeinen Formel II 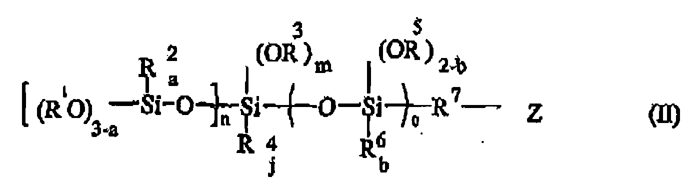
worin die Reste R¹ bis R⁶ jeweils unabhängig voneinander für einen linearen oder verzweigten, gesättigten oder ungesättigten Kohlenwasserstoffrest mit 1 bis 24 C-Atomen, einen gesättigten oder ungesättigten Cycloalkylrest mit 4 bis 24 C-Atomen oder einen Arylrest mit 6 bis 24 C-Atomen stehen, n, m und j jeweils für eine ganze Zahl von 0 bis 3 stehen, wobei m+n+j=3, a für eine ganze Zahl von 0 bis 3, b für eine ganze Zahl von 0 bis 2 und c für eine Zahl von 0 bis 8 steht, R⁷ für einen gegebenenfalls substituierten Alkylenrest mit 1 bis 44 C-Atomen, einen gegebenenfalls substituierten Cycloalkenylrest mit 6 bis 24 C-Atomen oder einen gegebenenfalls substituierten Arylenrest mit 6 bis 24 C-Atomen und Z für NCO steht, eingesetzt wird, die Menge an Bindemittel in der gesamten Zusammensetzung weniger als 10 Gew.-% beträgt und die Menge an Füllstoffen in der gesamten Zusammensetzung mehr als 20 bis 95 Gew.-% beträgt.

Gegenstand der vorliegenden Erfindung ist auch die Verwendung einer Zusammensetzung, mindestens enthaltend ein Bindemittel und einen Füllstoff, wobei als Bindemittel ein mindestens eine Silylgruppe aufweisendes Polyurethan enthalten ist, die Menge an Bindemittel in der gesamten Zusammensetzung weniger als 15 Gew.-% beträgt, die Menge an Füllstoffen in der gesamten Zusammensetzung mehr als 20 und weniger als 80 Gew.-% oder mehr als 80 bis 95 Gew.-% beträgt und das Gewichtsverhältnis von Füllstoff zu Bindemittel mehr als 1,44 : 1 beträgt, als wiederablösbarer Klebstoff.

Der Begriff "Polyurethan" steht im Rahmen des nachfolgenden Textes für eine definierte Polyurethanstruktur, wie sie sich im Rahmen einer gezielten ein- oder mehrstufigen Polyurethansynthese erhalten lässt. Der Begriff umfasst alle Abweichungen von dieser Struktur, wie sie sich durch die statistische Natur des Polyadditionsverfahrens ergeben.

Der Begriff "Zubereitung" steht im Rahmen des vorliegenden Textes für Gemische, enthaltend ein mindestens eine Silylgruppe tragendes "Polyurethan" oder ein Gemisch aus zwei oder mehr solcher "Polyurethane" gemäß der oben genannten Definition, mindestens einen Füllstoff sowie gegebenenfalls weitere Zusatzstoffe, wie sie entweder aufgrund der Art der Polyurethansynthese vorliegen (beispielsweise Lösemittel, Katalysatoren) oder nachträglich dem Polyurethan oder dem Gemisch aus zwei oder mehr Polyurethanen zugemischt wurden (beispielsweise Weichmacher, Reaktivverdünner und dergleichen).

Der Begriff "Bindemittel" bezieht sich im Rahmen des vorliegenden Textes auf das oben beschriebene Polyurethan oder ein Gemisch aus zwei oder mehr der oben beschriebenen Polyurethane, unabhängig davon, ob die Zusammensetzung noch weitere polymere Verbindungen enthält die reaktiv an der Aushärtung der Zusammensetzung beteiligt sind oder die Eigenschaften der Zusammensetzung auf sonstige Weise beeinflussen. Der Begriff "Bindemittel" umfasst im Rahmen des vorliegenden Textes auch keine niedermolekularen Verbindungen, die reaktiv an der Aushärtung der Zusammensetzung beteiligt sind.

Unter einer "Silylgruppen" wird im Rahmen der vorliegenden Erfindung eine Verbindung der allgemeinen Formel I verstanden, 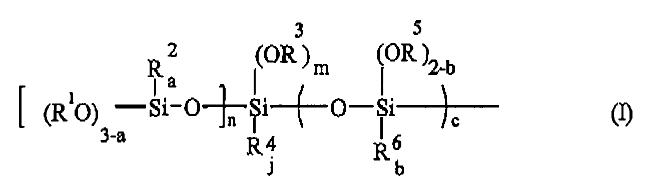 worin die Reste R¹ bis R⁶ jeweils unabhängig voneinander für einen linearen oder verzweigten, gesättigten oder ungesättigten Kohlenwasserstoffrest mit 1 bis etwa 24 C-Atomen, einen gesättigten oder ungesättigten Cycloalkylrest mit 4 bis etwa 24 C-Atomen oder einen Arylrest mit 6 bis etwa 24 C-Atomen stehen, n, m und j jeweils für eine ganze Zahl von 0 bis 3 stehen, wobei m+n+j=3) a für eine ganze Zahl von 0 bis 3, b für eine ganze Zahl von 0 bis 2 und c für eine Zahl von 0 bis 8 steht.

Polyurethane mit Silylgruppen, wie sie im Rahmen der vorliegenden Erfindung einsetzbar sind, sind aus dem Stand der Technik bekannt. So eignen sich beispielsweise die in der EP 0 342 411 A2 beschriebenen Polymeren zum Einsatz als Bindemittel im Rahmen der vorliegenden Erfindung. Es ist jedoch erfindungsgemäß bevorzugt, Silylgruppen tragende Polyurethane als Bindemittel einzusetzen, wie sie nachfolgend beschrieben werden.

Beispielsweise wird im Rahmen der vorliegenden Erfindung ein Polyurethan eingesetzt, das durch Umsetzung von mindestens drei Komponenten A, B und C herstellbar ist. Dabei wird
a) als Komponente A ein Polyisocyanat oder ein Gemisch aus zwei oder mehr Polyisocyanaten und
b) als Komponente B ein Polyol oder ein Gemisch aus zwei oder mehr Polyolen und
c) als Komponente C eine Verbindung der allgemeinen Formel II 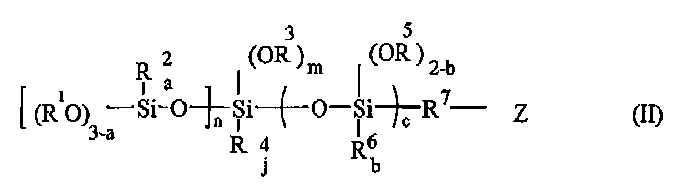
worin R¹ bis R⁶, a, b, c, n, m und j die oben genannte Bedeutung aufweisen, R⁷ für einen gegebenenfalls substituierten Alkylenrest mit 1 bis etwa 44 C-Atomen, einen gegebenenfalls substituierten Cycloalkenylrest mit 6 bis etwa 24 C-Atomen oder einen gegebenenfalls substituierten Arylenrest mit 6 bis etwa 24 C-Atomen und Z für NCO steht. Als Substituenten eignen sich beispielsweise funktionelle Gruppen wie Thioether-, Mercapto-, Amino-, Ester-, Amido-, Nitro- oder Ethergruppen oder Gemische aus zwei oder mehr davon. Im Rahmen der erfindungsgemäßen Verwendung wird bevorzugt ein Polyurethan entsprechend der vorstehenden Ausführungsform als Bindemittel eingesetzt, worin Z für NCO, NH₂, NHR¹, OH, SH oder COOH steht.

Als Komponente A wird im Rahmen der vorliegenden Erfindung ein Polyisocyanat oder ein Gemisch aus zwei oder mehr Polyisocyanaten eingesetzt. Unter Polyisocyanaten werden Verbindungen verstanden, die mindestens zwei Isocyanatgruppen (NCO-Gruppen) tragen. In der Regel sind dies Verbindungen der allgemeinen Struktur O=N=C-X-C=N=O, wobei X ein linearer oder verzweigter aliphatischer, alicyclischer oder aromatischer Kohlenwasserstoffrest ist, der gegebenenfalls weitere inerte oder in die Umsetzung eingreifende Substituenten aufweisen kann,

Als Polyisocyanate zum erfindungsgemäßen Einsatz als Komponente A kommen beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3 und-1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H₁₂-MDI), alkylsubstituierte Diphenylmethandiisocyanate, beispielsweise Mono-, Di-, Tri- oder Tetraalkyldiphenylenethandiisocyanat sowie deren partiell oder vollständig hydrierte Cycloalkylderivate, 4,4'-Diisocyanatophenylperfluorethan, Phthalsäure-bisisocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate, in Frage.

Ebenso im Sinne der vorliegenden Erfindung als Polyisocyanate zur Herstellung der Komponente A geeignet sind drei- oder höherwertige Isocyanate, wie sie beispielsweise durch Oligomerisierung von Diisocyanaten, insbesondere durch Oligomerisierung der oben genannten Isocyanate, erhältlich sind. Beispiele für solche drei- und höherwertigen Polyisocyanate sind die Triisocyanurate von HDI oder IPDI oder deren Gemische oder deren gemischte Triisocyanurate sowie Polyphenylmethylenpolyisocyanat, wie es durch Phosgenierung von Anilin-Formaldehyd-Kondensationsprodukten erhältlich ist.

Besonders bevorzugt ist im Rahmen der vorliegenden Erfindung der Einsatz von TDI und MDI als Komponente A.

Als Komponente B wird im Rahmen der vorliegenden Erfindung ein Polyol oder ein Gemisch aus zwei oder mehr Polyolen eingesetzt, wobei grundsätzlich alle im Rahmen der Polyurethanchemie üblicherweise eingesetzten Polyole in Frage kommen. Vorzugsweise wird jedoch als Komponente B ein Polyetherpolyol mit einem Molekulargewicht (M_{w}) von mindestens 4.000 und einer Polydispersität PD (M_{w}/Mₙ) von weniger als 1,5 oder einer OH-Funktionalität von etwa 1,8 bis etwa 2,0, oder einer Polydispersität PD (M_{w}/Mₙ) von weniger als 1,5 und einer NH- oder OH-Funktionalität von etwa 1,8 bis etwa 2,0, oder ein Gemisch aus zwei oder mehr solcher Polyetherpolyole, eingesetzt.

Es hat sich im Rahmen der vorliegenden Erfindung gezeigt, dass sich durch den Einsatz solcher Polyetherpolyole, bei der Herstellung von als Bindemittel geeigneten Polyurethanen nach dem Aushärten Polyurethane mit guten Materialeigenschaften im Sinne der erfindungsgemäßen Eigenschaftskombination einer ausgezeichneten Kohäsion und Adhäsion, verbunden mit einer guten Wiederablösbarkeit, erhalten lassen.

Der Begriff "Polyol" umfasst im Rahmen der vorliegenden Erfindung eine Verbindung, die mindestens zwei OH-Gruppen aufweist, unabhängig davon, ob die Verbindung noch weitere funktionelle Gruppen aufweist. Vorzugsweise umfasst ein im Rahmen der vorliegenden Erfindung eingesetztes Polyol jedoch nur OH-Gruppen als funktionelle Gruppen, oder, sofern weitere funktionelle Gruppen vorliegen sind alle weiteren funktionellen Gruppen zumindest gegenüber Isocyanaten unter den bei der Umsetzung von Komponente A und B herrschenden Bedingungen nicht reaktiv.

Der Begriff "Polyamin" umfasst im Rahmen der vorliegenden Erfindung eine Verbindung, die mindestens zwei NH₂- oder NHR-Gruppen aufweist, unabhängig davon, ob die Verbindung noch weitere funktionelle Gruppen aufweist. Vorzugsweise umfasst ein im Rahmen der vorliegenden Erfindung eingesetztes Polyamin jedoch nur NH₂-Gruppen als funktionelle Gruppen, oder, sofern weitere funktionelle Gruppen vorliegen sind alle weiteren funktionellen Gruppen zumindest gegenüber Isocyanaten unter den bei der Umsetzung von Komponente A und B herrschenden Bedingungen nicht reaktiv.

In einer bevorzugten Ausführungsform weisen die im Rahmen der vorliegenden Erfindung in Komponente B einsetzbaren Polyether eine PD (M_{w}/Mₙ) von weniger als etwa 1,48 auf. Besonders bevorzugt ist es, wenn die PD weniger als etwa 1,45 und besonders bevorzugt weniger als etwa 1,4 beträgt. Besonders bevorzugt sind Polyether mit einer Polydispersität von etwa 1,01 bis etwa 1,3, insbesondere etwa 1,05 bis etwa 1,18, beispielsweise etwa 1,08 bis etwa 1,11 oder etwa 1,12 bis etwa 1,14.
Im Rahmen einer weiteren bevorzugten Ausführungsform der Erfindung enthält Komponente B einen Polyether mit einem Molekulargewicht (M_{w}) von mindestens etwa 4,000 und einer durchschnittlichen OH-Funktionalität (durchschnittliche Zahl der OH-Gruppen pro Polyethermolekül) von mindestens etwa 1,8 bis etwa 2 und bevorzugt etwa 1,9 bis etwa 2,0. Es ist besonders bevorzugt, wenn die OH-Funktionalität des Polyethers etwa 1,93 bis etwa 2,0 beträgt, insbesondere etwa 1,95 oder etwa 1,98 bis etwa 2,0. In einer weiteren bevorzugten Ausführungsform besteht Komponente B aus einem solchen Polyether oder einem Gemisch aus zwei oder mehr solcher Polyether. Das heißt, die Funktionalität der gesamten Komponente B weist einen der oben genannten Werte auf.

Die erfindungsgemäß bevorzugt einzusetzenden Polyetherpolyole werden in einer dem Fachmann bekannten Weise durch katalysierte Umsetzung einer mindestens ein reaktives Wasserstoffatom aufweisenden Startverbindung mit Alkylenoxiden, beispielsweise Ethylenoxid, Propylenoxid, Butylenoxid, Styroloxid, Tetrahydrofuran oder Epichlorhydrin oder Gemischen aus zwei oder mehr davon umgesetzt. Zur Erzielung von besonders engen Molekulargewichtsverteilungen (PD), wie sie im Rahmen der vorliegenden Erfindung benötigt werden, hat sich die so genannte DMC-Katalyse, beispielsweise mit Zinkhexacyanokobaltat bewährt, wie sie beispielsweise in der US-A 3,278,457 beschrieben ist,

Die im Silylgruppen tragenden Polyurethan der erfindungsgemäßen Zusammensetzung eingesetzten Polyether wenden vorzugsweise unter Einsatz von Propylenoxid hergestellt.

Geeignete Startverbindungen für die Herstellung der Polyether sind beispielsweise Wasser, Ethylenglykol, Propylenglykol-1,2 oder -1,3, Butylenglykol-1,4 oder -1,3 Hexandiol-1,6, Octandiol-1,8, Neopentylglykol, 1,4-Hydroxymethylcyclohexan oder 2-Methyl-1,3-propandiol.

In einer bevorzugten Ausführungsform der Erfindung weisen die Polyether ein Molekulargewicht (M_{w}) von etwa 5.000 bis etwa 30.000 auf, insbesondere etwa 6.000 bis etwa 25.000. Gute Ergebnisse lassen sich beispielsweise mit Molekulargewichten von etwa 10.000 bis etwa 22.000 oder von etwa 11.000 bis etwa 20.000 erzielen, beispielsweise mit Molekulargewichten von etwa 12.000 bis etwa 18.000 oder 13.000 bis etwa 17.000 oder etwa 14.000 bis etwa 16.000 oder etwa 15.000.

Die erfindungsgemäß einzusetzenden Polyole weisen vorzugsweise eine OH-Zahl von etwa 5 bis etwa 15, vorzugsweise etwa 10 auf. Der Anteil an primären OH-Gruppen sollte unter etwa 20%, bezogen auf die gesamten OH-Gruppen, liegen, vorzugsweise bei weniger als 15%. Es ist besonders vorteilhaft, wenn die Säurezahl der eingesetzten Polyether bei weniger als etwa 0,1, vorzugsweise bei weniger als 0,05 und insbesondere bei weniger als 0,02 liegt.

Neben den bereits beschriebenen Polyethern kann die im Rahmen der vorliegenden Erfindung eingesetzte Komponente B noch weitere Polyole enthalten.

Komponente B kann beispielsweise Polyesterpolyole mit einem Molekulargewicht von etwa 200 bis etwa 30.000 enthalten. So können in Komponente B beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4Hydroxymethylcyclohexan, 2-Methyl-1,3-propandiol, Butandiol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren sind beispielsweise Bernsteinsäure und ihre höheren Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure, Als Tricarbonsäuren sind beispielsweise Zitionensäure oder Trimellithsäure geeignet. Im Rahmen der Erfindung besonders geeignet sind Polyesterpolyole aus mindestens einer der genannten Dicarbonsäuren und Glycerin, welche einen Restgehalt an OH-Gruppen aufweisen. Besonders geeignete Alkohole sind Hexandiol, Ethylenglykol, Diethylenglykol oder Neopentylglykol oder Gemische aus zwei oder mehr davon. Besonders geeignete Säuren sind Isophthalsäure oder Adipinsäure oder deren Gemisch.

Polyesterpolyole mit hohem Molekulargewicht umfassen beispielsweise die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit vorzugsweise 1 bis 3 C-Atomen eingesetzt werden. Die Polycarbonsäuren können aliphatisch, cycloaliphatisch, aromatisch und/oder heterocyclisch sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureaahydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein.

Ebenso geeignet sind die reinen oder gemischten Alkylenoxidaddukte der Polyesterpolyole. Unter Alkylenoxidaddukten werden im Rahmen der vorliegenden Erfindung die Umsetzungsprodukte der genannten Polyole mit C₁₋₁₂-Alkylenoxiden, beispielsweise Ethylenoxid, Propylenoxid, Butylenoxid, Styroloxid, mit Tetrahydrofuran oder Epichlorhydrin oder Gemischen aus zwei oder mehr davon verstanden. Unter "reinen" Alkylenoxidaddukten werden dabei die Umsetzungsprodukte mit nur einer Sorte Alkylenoxid, unter "gemischten" Alkylenoxidaddukten die Umsetzungsprodukte mit zwei oder mehr Sorten Alkylenoxiden verstanden.

Weiterhin zum Einsatz in Komponente B geeignet sind beispielsweise Polyether, die durch Polymerisate modifiziert wurden. Derartige Produkte sind beispielsweise erhältlich, indem Styrol, Acrylnitril, Vinylacetat, Acrylsäureester oder Methacrylsäureester, oder Gemische aus zwei oder mehr davon, in der Gegenwart von Polyethern polymerisiert werden.

Zum Einsatz in Komponente B geeignet sind, wie bereits angedeutet, Lactonpolyole und deren Alkylenoxidaddukte. Lactonpolyole lassen sich beispielsweise durch Umsetzung eines Lactons, beispielsweise ε-Caprolacton, mit einem polyfunktionellen Initiator, beispielsweise einem polyfunktionellen Alkohol, einem Amin oder einem Aminoalkohol hergestellt werden. Die Herstellung kann gegebenenfalls in Gegenwart eines Alkylenoxids oder eines Gemischs aus zwei oder mehr Alkylenoxiden erfolgen.
Weiterhin zum Einsatz in Komponente B geeignet sind beispielsweise Polyalkanolamine und deren reine oder gemischte Alkylenoxidaddukte, nicht reduzierende Zucker und Zuckerderivate und deren reine oder gemischte Alkylenoxidaddukte, die reinen oder gemischten Alkylenoxidaddukte von Anilin-Formaldehydkondensationsprodukten und Polyphenolen, gegenüber Isocyanaten reaktive Fette und Fettderivate, beispielsweise Ricinusöl, und deren reine oder gemischte Alkylenoxidaddukte, Vinylpolymere mit zwei oder mehr OH-Gruppen und deren reine oder gemischte Alkylenoxidaddukte.

Komponente B kann in Rahmen der vorliegenden Erfindung damit eine oder mehrere Polyolkomponenten enthalten, wobei jedoch vorzugsweise mindestens ein Polyether mit einem Molekulargewicht (Mₙ) von mindestens 4.000 und einer Polydispersität PD (M_{w}/Mₙ) von weniger als 1,5 oder einer OH-Furaktionalität von etwa 1,8 bis etwa 2,0, oder einer Polydispersität PD (M_{w}/Mₙ) von weniger als 1,5 und einer OH-Funktionalität von etwa 1,8 bis etwa 2,0 in Komponente B vorliegt.

Es ist im Rahmen der vorliegenden Erfindung bevorzugt, wenn der Anteil dieses Polyethers oder eines Gemischs aus zwei oder mehr solcher Polyether an Komponente B mindestens etwa 90 Gew.-%, vorzugsweise darüber, beträgt.

Vorteilhafterweise beträgt die OH-Zahl der Komponente B etwa 2 bis etwa 20, insbesondere etwa 3 bis etwa 19, beispielsweise etwa 4, 5, 6, 7, 8 oder 9 mg KOH/g oder etwa 10, 11, 12, 13, 14, 15, 16, 17 oder 18 mg KOH/g.

Zur Herstellung des erfindungsgemäß als Bindemittel einsetzbaren Polyurethans wird beispielsweise die Komponente A mit der Komponente B unter in der Polyurethanchemie üblichen Bedingungen umgesetzt, in der Regel in der Anwesenheit von Katalysatoren. Vorzugsweise wird das Verhältnis von NCO-Gruppen zu OH-Gruppen so eingestellt, dass das Molekulargewicht (Mₙ) des in der erimdungsgemäßen Zusammensetzung enthaltenen Silylgruppen tragenden Polyurethans mindestens etwa 8.000, vorzugsweise mehr als etwa 20.000 bis etwa 40.000 beträgt. Es kann vorteilhaft sein, wenn ein derartiges Polyurethanmolekül mindestens etwa 4 Urethangruppen aufweist.

Ein in der erfindungsgemäßen Zusammensetzung enthaltenes Bindemittel weist seitenständig oder endständig zum Polymerrückgrat eine Gruppe der allgemeinen Formel I auf, 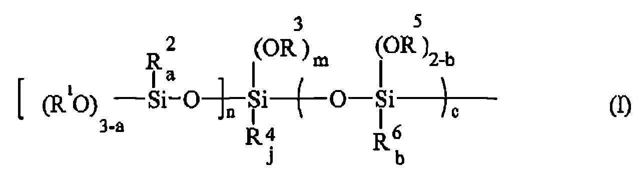 worin die Reste R¹ bis R⁶ jeweils unabhängig voneinander für einen linearen oder verzweigten, gesättigten oder ungesättigten Kohlenwasserstoffrest mit 1 bis etwa 24 C-Atomen, einen gesättigten oder ungesättigten Cycloalkylrest mit 4 bis etwa 24 C-Atomen oder einen Arylrest mit 6 bis etwa 24 C-Atomen stehen, n, m und j jeweils für eine ganze Zahl von 0 bis 3 stehen, wobei m+n+j=3, a für eine ganze Zahl von 0 bis 3, b für eine ganze Zahl von 0 bis 2 und c für eine Zahl von 0 bis 8 steht.

Zur Herstellung des im Rahmen der erfindungsgemäßen Verwendung in der Zusammensetzung bevorzugt enthaltenen Polyurethans mit einer oder mehreren der oben angegebenen Endgruppen der allgemeinen Formel I, wird die Umsetzung der Komponenten A und B beispielsweise in Gegenwart einer Komponente C durchgeführt, wobei als Komponente C eine Verbindung Verbindungen der allgemeinen Formel II 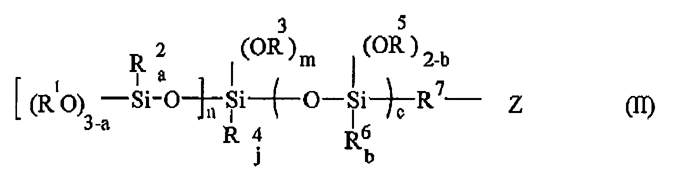 worin R¹ bis R⁶, a, b, c, n, m und j die oben genannte Bedeutung aufweisen, R⁷ für einen gegebenenfalls substituierten Alkylenrest mit 1 bis etwa 44 C-Atomen, einen gegebenenfalls substituierten Cycloalkenylrest mit 6 bis etwa 24 C-Atomen oder einen gegebenenfalls substituierten Arylenrest mit 6 bis etwa 24 C-Atomen und Z für NCO, NH₂, NHR¹, OH, SH oder COOH steht. Als Substituenten eignen sich beispielsweise funktionelle Gruppen wie Thioether-, Mercapto-, Amino-, Ester-, Amido-, Nitro- oder Ethergruppen oder Gemische aus zwei oder mehr davon, eingesetzt wird,

Es ist jedoch ebenso möglich, zuerst die Komponenten A und B miteinander zu einem Präpolymeren umzusetzen, so dass eine ausreichende Anzahl an NCO-Endgruppen entsteht und das so erhaltene Präpolymere anschließend mit Komponente C umzusetzen. Dabei kann die Komponente C lediglich eine Verbindung der allgemeinen Formel II enthalten, sie kann jedoch ebenso gut ein Gemisch aus zwei oder mehr Verbindungen der allgemeinen Formel II enthalten.

Zur Herstellung des in der erfindungsgemäßen Zusammensetzung enthaltenen und im Rahmen einer weiteren bevorzugten Ausführungsform der erfindungsgemäßen Verwendung als Bindemittel eingesetzten Polyurethans mit einer oder mehreren der oben angegebenen Endgruppen der allgemeinen Formel I kann eine Umsetzung der Komponenten B und C durchgeführt werden, wobei als Komponente C eine Verbindung der allgemeinen Formel II 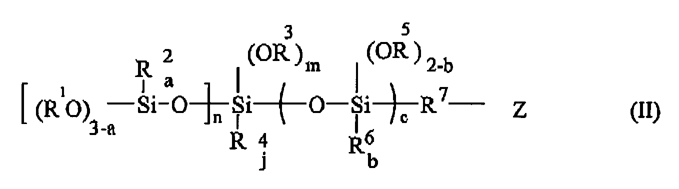 worin R¹ bis R⁶, a, b, c, n, m und j die oben genannte Bedeutung aufweisen, R⁷ für einen gegebenenfalls substituierten Alkylenrest mit 1 bis etwa 44 C-Atomen, einen gegebenenfalls substituierten Cycloalkenylrest mit 6 bis etwa 24 C-Atomen oder einen gegebenenfalls substituierten Arylenrest mit 6 bis etwa 24 C-Atomen und Z für NCO steht, eingesetzt wird. Als Substituenten eignen sich beispielsweise funktionelle Gruppen wie Thioether-, Mercapto-, Amino-, Ester-, Amido-, Nitro- oder Ethergruppen oder Gemische aus zwei oder mehr davon.

Im Rahmen einer bevorzugten Ausführungsform der erfindungsgemäßen Verwendung werden als mindestens ein Reaktionspartner Verbindungen der allgemeinen Formel II eingesetzt, in denen Z für eine Aminogruppe oder eine Isocyanato-Gruppe (NCO-Gruppe) steht. Derartige Verbindungen werden im Rahmen des vorliegenden Textes auch als Aminosilane bzw. Isocyanatosilane bezeichnet.

Geeignete Aminosilane sind beispielsweise N-(α-Methyldimethoxysilylmethyl)amin, N-(α-Trimethoxysilylmethyl)amin, N-(α-Diethylmethoxysilylmethyl)amin, N-(α-Ethyldimethoxysilylmethyl)amin, N-(α-Methyldiethoxysilylmethyl)amin, N-(α-Triethoxysilylmethyl)amin, N-(α-Ethyldiethoxysilylmethyl)amin, N-(β-Methyldimethoxysilylethyl)amin, N-(β-Trimethoxysilylethyl)amin, N-(β-Ethyldimethoxysilylethyl)amin, N-(β-Methyldiethoxysilylethyl)amin, N-(β-Triethoxysilylethyl)amin, N-(β-Ethyldiethoxysilylethyl)amin, N-(γ-Methyldimethoxysilylpropyl)amin, N-(γ-Trimethoxysilylpropyl)amin, N-(γ-Ethyldimethoxysilylpropyl)amin, N-(γ-Methyldiethoxysilylpx-opyl)amin, N-(γ-Trxethoxysilylpropyl)amin, N-(y-Ethyldiethoxysilylpropyl)amin, N-(4-Methyldimethoxysilylbutyl)amin, N-(4-Trimethoxysilylbutyl)amin, N-(4-Triethylsilylbutyl)amin, N-(4-Diethylmethoxysilylbutyl)amin, N-(4-Ethyldimethoxysilylbutyl)amin, N-(4-Methyldiethoxysilylbutyl)amin, N-(4-Triethoxysilylbutyl)amin, N-(4-Diethylethoxysilylbutyl)amin, N-(4-Ethyldiethoxysilylbutyl)amin, N-(5-Methyldimethoxysilylpentyl)amin, N-(5-Trimethoxysilylpentyl)amin, N-(5-Triethylsilylpentyl)amin, N-(5-Ethyldimethoxysilylpentyl)amin, N-(5-Methyldiethoxysilylpentyl)amin, N-(5-Triethoxysilylpentyl)amin, N-(5-Diethylethoxysilylpentyl)amin, N-(5-Ethyldiethoxysilylpentyl)amin, N-(6-Methyldimethoxysilylhexyl)amin, N-(6-Trimethoxysilylhexyl)amin, N-(6-Ethyldimethoxysilylhexyl)amin, N-(6-Methyldiethoxysilylhexyl)amin, N-(6-Triethoxysilylhexyl)amin, N-(6-Ethyldiethoxysilylhexyl)amin, N-[γ-tris-(Trimethoxysiloxy)silylpropyl]amin, N-[γ-tris(Trimethoxysiloxy)silylpropyl]amin, N-(γ-Trimethoxysiloxydimethylsilylpropyl)amin, N-(γ-Trimethylsiloxydimethoxysilylpropyl)amin, N-(γ-Triethoxysiloxydiethylpropyl)amin, N-(γ-Triethoxysiloxydiethoxysilylpropyl)amin, N,N-Butyl-(γ-Trimethoxysilylpropyl)amin, N,N-Butyl-(γ-Triethoxysilylpropyl)amin, N,N-Phenyl-(γ-Trimethoxysilylpropyl)amin, , N,N-Phenyl-(γ-Triethoxysilylpropyl)amin, N,N-Cydohexyl-(γ-Trimethoxysilylpropyl)amin, N,N-Ethyl-(γ-Trimethoxysilylpropyl)amin, Diethyl-N-(Trimethoxysilylpropyl)aspartat, Diethyl-N-(Triethoxysilylpropyl)aspartat N,N-Ethyl-(γ-Dimethoxymethylsilylpropyl)amin, N,N-Bthyl-(γ-Trimethoxysilylisobutyl)-amin, N,N-Bis-(trimethoxypropyl)-amin, N,N-Ethyl-(γ-Trimethoxysilylisobutyl)amin, N,N-Ethyl-(α-Trimethoxysilylmethyl)-amin, Dibutyl-N-(trimethoxysilylpropyl)aspartat, Dibutyl-N-(Triethoxysilylpropyl)aspartat, N,N-(β-Ammopropyl)-(γ-Trimethoxy-silylpropyl)amin, N,N'-Di-(Trimethoxysilylpropyl)ethylendiamin, Tetra-(Trimethoxysilylpropyl)ethylendiamin und N,N-Ethyl-(β-Trimethoxysilylethyl)amin oder N-[γ-tris(Trimethylsiloxy)silylpropyl]amin oder N,N-Cyclohexyl-α-triethoxysilylmethylamin oder N,N-Cyclohexyl-α-methyldiethoxysilylmethylamin oder N,N-Phenyl-α-trimethoxysilylmethylamin oder N,N-Phenyl-α-methyldimethoxysilylmethylamin oder Gemische aus zwei oder mehr davon.

Geeignete, der allgemeinen Formel II entsprechende und im Rahmen der vorliegenden Erfindung allgemein als Komponente C einsetzbare Isocyanatosilane sind beispielsweise Methyldimethoxysilylmethylisocyanat, Trimethoxysilylmethylisocyanat, Diethylmethoxysilylmethylisocyanat, Ethyldimethoxysilylmethylisocyanat, Methyldiethoxysilylmethylisocyanat, Triethoxysilylmethylisocyanat, Ethyldiethoxysilylmethylisocyanat, Methyldimethoxysilylethylisocyanat, Trimethoxysilylethylisocyanat, Ethyldimethoxysilylethylisocyanat, Methyldiethoxysilylethylisocyanat, Triethoxysilylethylisocyanat, Ethyldiethoxysilylethylisocyanat, Methyldimethoxysilylpropylisocyanat, Trimethoxysilylpropylisocyanat, Ethyldimethoxysilylpropylisocyanat, Methyldiethoxysilylpropylisocyanat, Triethoxysilylpropylisocyanat, Ethyldiethoxysilylpropylisocyanat, Ethyldimethoxysilylbutylisocyanat, Trimethoxysilylbutylisocyanat, Triethylsilylbutylisocyanat, Diethylmethoxysilylbutylisocyanat, Ethyldimethoxysilylbutylisocyanat, Methyldiethoxysilylbutylisocyanat, Triethoxysilylbutylisocyanat, Diethylethoxysilylbutylisocyanat, Ethyldiethoxysilylbutylisocyanat, Methyldimethoxysilylpentylisocyanat, Trimethoxysilylpentylisocyanat, Triethylsilylpentylisocyanat, Ethyldimethoxysilylpentylisocyanat, Methyldiethoxysilylpentylisoeyanat, Triethoxysilylpentylisocyanat, Diethylethoxysilylpentylisocyanat, Ethyldiethoxysilylpentylisocyanat, Methyldimethoxysilylhexylisocyanat, Trimethoxysilylhexylisocyanat, Ethyldimethoxysilylhexylisocyanat, Methyldiethoxysilylhexylisocyanat, Triethoxysilylhexylisocyanat, Ethyldiethoxysilylhexylisocyanat, γ-Trimethoxysiloxydimethylsilylpropylisocyanat, γ-Trimethylsiloxydimethoxysilylpropylisoeyanat, γ-Triethoxysiloxydiethylpropylisocyanat, γ-Triethoxysiloxydiethoxysilylpxopylisocyanat, oder Gemische aus zwei oder mehr davon.

Weiterhin können im Rahmen der vorliegenden Erfindung Aminosilane (nur im Rahmen der erfindungsgemäßen Verwendung) oder Isocyanatosilane der allgemeinen Formel II eingesetzt werden, in denen die mit dem Parameter c gekennzeichnete Wiederholungseinheit für eine Wiederholungseinheit der allgemeinen Formel III 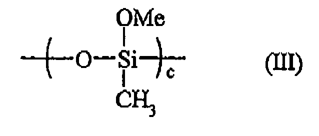 steht, worin c für einen Wert von 1 bis etwa 6 steht.

Vorzugsweise werden Verbindungen eingesetzt, die mindestens eine Methoxygruppe oder eine Ethoxygruppe am Siliziumatom tragen, besonders bevorzugt sind Verbindungen mit zwei oder drei Methoxygruppen oder zwei oder drei Ethoxygruppen oder beliebigen Gemischen aus Methoxy und Ethoxygruppen.

Im Rahmen der erfindungsgemäßen Verwendung werden insbesondere 3-Aminopropyltrimethoxysilan, 3-Aminopropyldimethoxymethylsilan, 3-Aminopropyltriethoxysilan, 3-Aminopropyldimethoxyphenylsilan und 3-Aminopropyldiethoxyethylsilan eingesetzt.

Komponente C wird in einer bevorzugten Ausführungsform der Erfindung in einer solchen Menge eingesetzt, dass ihr Anteil im Silylgruppen tragenden Polyurethan der erfindungsgemäßen Zusammensetzung weniger als etwa 3 Gew.-%, insbesondere etwa 0,5 bis etwa 2,5 Gew.-%, beispielsweise etwa 1,8 bis etwa 2,2 Gew.-%, beträgt.

Die Herstellung des in der erfindungsgemäßen Zusammensetzung enthaltenen Polyurethans kann sowohl in einem einstufigen als auch in einem mehrstufigen Verfahren erfolgen. Beim einstufigen Verfahren werden zunächst alle Ausgangsstoffe in Gegenwart eines organischen Lösemittels bei einem Wassergehalt von weniger als etwa 0,5 Gew.-% gemischt. Die Mischung wird auf etwa 80 bis etwa 200°C, insbesondere auf etwa 100 bis etwa 140°C für einen Zeitraum von etwa 1 bis etwa 30, insbesondere etwa 2 bis etwa 4 Stunden erhitzt. Die Reaktionszeit kann durch Zugabe von Katalysatoren gegebenenfalls verkürzt werden bzw. die Reaktionstemperatur kann herabgesetzt werden. Als Katalysatoren sind beispielsweise tertiäre Amine geeignet. Beispielsweise sind dies Triethylamin, Dimethylbenzylamin, Bisdimethylaminoethylether und Bis-methylaminomethylphenol. Besonders geeignet sind beispielsweise 1Methylimidazol, 1-Methyl-1-vinylimidazol, 1-Allylimidazol, 1-Phenylimidazol, 1,2,4,5Tetramethylimidazol, 1-(3-Aminopropyl)imidazol, Pyrimidazol, 4-Dimethylaminopyridin (DMAP), 4-Pyrrolidinopyridin, 4-Morpholinopyridin und 4-Methylpyridin. Ebenfalls als Katalysatoren geeignet sind beispielsweise metallorganische Verbindungen wie Eisen-, Titan- oder Zinnverbindungen geeignet, insbesondere die 1,3-Dicarbonylverbindungen des Eisens oder des 2- bzw. 4-wenigen Zinns, insbesondere die Sn(II)-Carboxylate bzw. die Dialkyl-Sn(IV)-Dicarboxylate oder die entsprechenden Dialkoxylate, beispielsweise Dibutylzinndilaurat, Dibutylzinndiacetat, Dioctylzinndiacetat, Dibutylzinnmaleat, Zinn(II)octoat, Zinn(II)phenolat oder die Acetyl-acetonate des 2- bzw. 4-wertigen Zinns.

Vorzugsweise wird jedoch ohne Katalysator gearbeitet, auf Lösemittel kann gegebenenfalls verzichtet werden.

Im Rahmen der erfindungsgemäßen Verwendung wird bevorzugt nach dem mehrstufigen Verfahren gearbeitet. Hierbei wird zunächst durch geeignete Wahl der stöchiometrischen Verhältnisse aus den Komponenten A und B nach dem obigen Verfahren ein Präpolymeres mit NCO-Endgruppen hergestellt, das in einer zweiten Stufe mit Komponente C, umgesetzt wird. Anschließend wird das Präpolymere mit der Komponente C bei 50 bis 120°C so umgesetzt, dass die NCO-Gruppen ganz oder teilweise mit der Komponente C reagieren.

Das Bindemittel der erfindungsgemäßen Zusammensetzung weist beispielsweise eine Viskosität von 10.000 bis 300.000 mPas (Brookfield RVT, 23°C, Spindel 7, 2,5 U/min auf.

Die erfindungsgemäße Zusammensetzung enthält mehr als 20 und weniger als 80 Gew.-% oder mehr als 80 bis 95 Gew.-% beziehungsweise - sofern der Anteil an Bindemittel weniger als 10 Gew.-% beträgt - mehr als 20 bis 95 Gew.-% an Füllstoffen. Als Füllstoffe geeignet sind beispielsweise mit Isocyanaten und Silanen verträgliche anorganische Verbindungen wie Kreide, Kalkmehl, Kaolin, Talkum, Bariumsulfat, Glimmer, gefällte Kieselsäure, pyrogene Kieselsäure, Zeolithe, Bentonite, gemahlene Mineralstoffe, Claskugeln, Clasmehl, Glashohlkugeln, Glasfasern und Glasfaserkurzschnitte sowie weitere, dem Fachmann bekannte anorganische Füllstoffe, sowie organische Füllstoffe, insbesondere Faserkurzschnitte oder Kunststoffhohlkugeln. Gegebenenfalls können Füllstoffe eingesetzt werden, die der Zubereitung Thixotropie verleihen, beispielsweise quellbare Kunststoffe wie PVC, Polyamidpulver oder Polyarnidwachse.

Der Anteil an Füllstoffen an der erfindungsgemäßen Zusammensetzung beträgt vorzugsweise mehr als 25, insbesondere mehr als etwa 30 Gew.-%. Besonders geeignet sind Zusammensetzungen, die beispielsweise etwa 35 bis weniger als etwa 80, insbesondere etwa 40 bis etwa 70, beispielsweise etwa 45 bis etwa 65 oder etwa 50 bis etwa 60 Gew.-% an Füllstoffen enthalten. Außerdem eignen sich Zusammensetzungen, die beispielsweise mehr als 80 bis etwa 95, insbesondere etwa 82 bis etwa 93, beispielsweise etwa 85 bis etwa 90 Gew.-% an Füllstoffen enthalten.

Es hat sich weiterhin als vorteilhaft herausgestellt, wenn die in einer erfindungsgemäßen Zusammensetzung enthaltenen Bindemittel und die in der erfindungsgemäßen Zusammensetzung enthaltenen Stoffe innerhalb eines bestimmten Verhältnisses zueinander stehen. So ist es beispielsweise vorteilhaft, wenn das Verhältnis von Füllstoffen zu Bindemitteln mindestens 1,448:1 beträgt. Als besonders vorteilhaft hat sich herausgestellt, wenn das Verhältnis 1,5:1 bis weniger als 15:1 oder 1,6:1 bis weniger als 10:1, beispielsweise etwa 2:1 bis etwa 8:1 oder weniger als etwa 8:1 oder etwa 3:1 bis etwa 7:1 oder etwa 4:1 bis etwa 6,5:1 beträgt.

Das Silylgruppen tragende Polyurethan der erfindungsgemäßen Zusammensetzung kann bereits in der bislang beschriebenen Form zusammen mit einem entsprechenden Füllstoff zu seinem endgültigen Einsatz kommen. In der Regel ist es jedoch vorteilhaft, wenn das Bindemittel in einer Zusammensetzung beziehungsweise Zubereitung zum Einsatz kommt, die weitere Verbindungen, beispielsweise zur Regulierung der Viskosität oder der Materialeigenschaften, enthält.

Es ist beispielsweise möglich, dass die Viskosität des Bindemittels für bestimmte Anwendungen zu hoch ist. Es wurde jedoch gefunden, dass sich die Viskosität des Bindemittels in der Regel durch Verwendung eines "Reaktiwerdünners" auf einfache und zweckmäßige Weise verringern lässt, ohne dass die Materialeigenschaften des ausgehärteten Polyurethans wesentlich darunter leiden.

Ein weiterer Gegenstand der Erfindung ist daher eine Zubereitung, enthaltend ein erstes Polyurethan gemäß der vorstehenden Beschreibung und mindestens ein zweites Polyurethan mit mindestens einer gegenüber Wasser reaktiven Endgruppe, insbesondere einer NCO-Gruppe oder einer Alkoxysilangruppe oder beiden, dessen Molekulargewicht (Mₙ) höchstens 10.000 beträgt und um mindestens 3.000, vorzugsweise mindestens 5.000 geringer ist als das Molekulargewicht des ersten Polyurethans, als Reaktivverdünner.

Vorzugsweise weist der Reaktivverdünner mindestens eine funktionelle Gruppe auf, die unter Feuchtigkeitseinfluss in der Lage ist mit einer reaktiven Gruppe des ersten Polyurethans der erfindungsgemäßen Zubereitung unter Kettenverlängerung bzw. Vernetzung zu reagieren (Reaktivverdünner). Bei der mindestens einen funktionellen Gruppe kann es sich um jede unter Feuchtigkeitseinfluss mit Vernetzung oder Kettenverlängerung reagierende funktionelle Gruppe handeln.

Als Reaktivverdünner eignen sich alle polymeren Verbindungen, die mit dem ersten Polyurethan der erfindungsgemäßen Zubereitung unter Verringerung der Viskosität mischbar sind und die Materialeigenschaften des nach Aushärtung oder Vernetzung entstehenden Produkts weitgehend unbeeinflusst lassen, oder zumindest nicht so nachteilig beeinflussen, dass die Unbrauchbarkeit des Produkts daraus resultiert. Geeignet sind beispielsweise Polyester, Polyether, Polymerisate von Verbindungen mit olefinisch ungesättigter Doppelbindung oder Polyurethane, sofern die oben genannten Voraussetzungen erfüllt werden.

Vorzugsweise handelt es sich bei den Reaktivverdünnern jedoch um Polyurethane mit wenigstens einer Alkoxysilangruppe als reaktive Gruppe.
Die Reaktivverdünner können ein oder mehrere funktionelle Gruppen aufweisen, bevorzugt liegt die Zahl der funktionellen Gruppen jedoch bei 1 bis etwa 6, insbesondere bei etwa 2 bis etwa 4, beispielsweise etwa 3. Die Viskosität der Reaktivverdünner beträgt in einer bevorzugten Ausführungsform weniger als etwa 20,000 mPas, insbesondere etwa 1.000 bis etwa 10.000, beispielsweise etwa 3.000 bis etwa 6.000 mPas (Brookfield RVT, 23°C, Spindel 7, 2,5 U/min).

Die im Rahmen des erfindungsgemäßen Verfahrens einsetzbaren Reaktivverdünner können eine beliebige Molekulargewichtsverteilung (PD) aufweisen, und sind demnach nach den üblichen Methoden der Polymerchemie herstellbar.

Vorzugsweise werden als Reaktivverdünner Polyurethane eingesetzt, die aus einer Polyolkomponente und einer Isocyanatkomponente und anschließender Funktionalisierung mit einer oder mehreren Alkoxysilylgruppen hergestellt werden können. Der Begriff "Polyolkomponente" umfasst dabei im Rahmen des vorliegenden Textes ein einzelnes Polyol oder ein Gemisch von zwei oder mehr Polyolen, die zur Herstellung von Polyurethanen herangezogen werden können. Unter einem Polyol wird ein polyfunktioneller Alkohol verstanden, d.h., eine Verbindung mit mehr als einer OH-Gruppe im Molekül.

Vorzugsweise weist die im Rahmen der vorliegenden Erfindung als Reaktivverdünner vorliegende Verbindung mindestens eine Alkoxysilangruppe auf, wobei unter den Alkoxysilangruppen die Di- und Trialkoxysilangruppen bevorzugt sind. In einer bevorzugten Ausführungsform der Erfindung weist der Reaktivverdünner als mindestens eine mit Wasser reaktive Endgruppe eine Endgruppe der allgemeinen Formel I auf, wobei R¹ und R² und R³ die bereits genannten Bedeutungen haben.

Die Herstellung der im Rahmen der vorliegenden Erfindung bevorzugt eingesetzten Reaktivverdünner kann beispielsweise analog der oben beschriebenen Herstellung des Bindemittels erfolgen, Dabei wird zunächst aus Isocyanatkomponente und Polyolkomponente ein Präpolymeres mit einer oder mehreren NCO-Endgruppen hergestellt, die anschließend mit geeigneten Alkoxysilanen zu den bevorzugten Reaktiwerdünnern umgesetzt werden. Geeignete Alkoxysilane sind insbesondere die oben beschriebenen Alkoxysilane, wie sie beispielsweise zum Einsatz in Komponente C geeignet sind,

Die erfindungsgemäße Zubereitung enthält das erste Polyurethan und den Reaktivverdünner oder ein Gemisch aus zwei oder mehr Reaktivvefdünnern in der Regel in einem solchen Verhältnis, dass die Zubereitung eine Viskosität von höchstens 200.000 mPas (Brookfield RVT, 23°C, Spindel 7, 2,5 U/min) aufweist. Hierzu ist in der Regel ein Anteil an Reaktivverdünner (hierunter fällt auch ein Gemisch aus zwei oder mehr Reaktivverdünnem), bezogen auf die gesamte Zubereitung, von etwa 1 Gew.-% bis zu etwa 70 Gew,-%, insbesondere von etwa 5 Gew.-% bis etwa 25 Gew.-% geeignet.

Zur Reduzierung der Viskosität des Polyurethans der erfindungsgemäßen Zusammensetzung lässt sich neben oder anstatt eines Reaktivverdünners auch ein Weichmacher einsetzen. Als "Weichmachers" werden im Rahmen der vorliegenden Erfindung Verbindungen bezeichnet, die gegenüber dem ersten Polyurethan inert sind und die Verringerung der Viskosität einer Zubereitung bewirken, die ein erfindungsgemäßes Polyurethan oder ein Gemisch aus zwei oder mehr erfindungsgemäßen Polyurethanen enthält.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester der difunkionellen, aliphatischen Dicarbonsäuren, beispielsweise das Veresterungsprodukt von Adipinsäuremonooctylester mit 2-Ethylhexanol (Edenol DOA, Fa. Cognis, Düsseldorf). Außerdem geeignet sind weichmachende Alkylsulfonsäureester wie Phenylalkylsulfonsäureester. Ebenfalls als Weichmacher geeignet sind die reinen oder gemischten Ether monofunktioneller, linearer oder verzweigter C4-16 Alkohole oder Gemische aus zwei oder mehr verschiedenen Ethern solcher Alkohole, beispielsweise Dioctylether (erhältlich als Cetiol OE, Fa. Cognis, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₁₀-alkylether, insbesondere die Dimethyl- oder Diethylether von Diethylenglykol oder Dipropylenglykol, sowie Gemische aus zwei oder mehr davon.

Ebenfalls im Rahmen der vorliegenden Erfindung als Weichmacher geeignet sind Diurethane. Diurethane lassen sich beispielsweise durch Umsetzung von Diolen mit OH-Endgruppen mit monofunktionellen Isocyanaten herstellen, indem die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Die erfindungsgemäße Zubereitung enthält die genannten Weichmacher in der Regel in einer solchen Menge, dass die Viskosität der Zubereitung höchstens etwa 700.000 mPas (Brookfield RVT, 23°C, Spindel 7, 2,5 U/min beträgt.

Es hat sich weiterhin als vorteilhaft herausgestellt, wenn die Extrusionsrate einer erfindungsgemäßen Zubereitung, gemessen nach ISO 9048 (Lochplatte mit 4 mm Durchmesser, 2 bar) etwa 100 bis etwa 1000 ml/min beträgt. Unter Berücksichtigung der unterschiedlichen Polyurethane, die in der Zubereitung enthalten sein können, kann zum Erreichen der angegebenen Viskosität eine unterschiedliche Menge an Weichmacher erforderlich sein. In der Regel lässt sich die geforderte Viskosität jedoch beispielsweise durch Zugabe einer Menge von etwa 1 bis etwa 30 Gew.-% Weichmacher, bezogen auf die Zubereitung, erreichen. Eine Erhöhung der Weichmachermenge führt in der Regel zu einem weiteren Absinken der Viskosität.

Die erfindungsgemäße Zubereitung kann die Reaktivverdünner oder die Weichmacher jeweils einzeln oder im Gemisch enthalten.

Neben Reaktivverdünnern und Weichmachern kann die erfindungsgemäße Zubereitung noch weitere Zusatzstoffe enthalten, die in der Regel zur Modifikation bestimmter Materialeigenschaften der Zubereitung vor oder nach der Verarbeitung dienen oder die Stabilität der Zubereitung vor oder nach der Verarbeitung fördern.
Häufig ist es sinnvoll, die erfindungsgemäßen Zubereitungen gegenüber eindringender Feuchtigkeit zu stabilisieren, um die Lagerbarkeit (shelf-life) zu erhöhen. Eine solche Verbesserung der Lagerbarkeit lässt sich beispielsweise durch den Einsatz von Feuchtigkeits-Stabilisatoren erreichen. Als Feuchtigkeits-Stabilisatoren eignen sich alle Verbindungen, die mit Wasser unter Bildung einer gegenüber den in der Zubereitung vorliegenden reaktiven Gruppen inerten Gruppe reagieren, und hierbei möglichst geringe Veränderungen ihres Molekulargewichts eingehen. Weiterhin muss die Reaktivität der Stabilisatoren gegenüber in die Zubereitung eingedrungener Feuchtigkeit höher sein, als die Reaktivität der Endgruppen des in der Zubereitung vorliegenden erfindungsgemäßen Polyurethans oder des Gemischs aus zwei oder mehr Polyurethanen.

Als Feuchtigkeits-Stabilisatoren eignen sich beispielsweise Isocyanate. In einer bevorzugten Ausführungsform werden als Feuchtigkeits-Stabilisatoren jedoch Silane eingesetzt. Beispielsweise Vinylsilane wie 3-Vinylpropyltri-ethoxysilan, Oximsilane wie Methyl-O,O',O"-butan-2-on-trioximosilan oder O,O',O",O"'-Butan-2-ontetraoximosilan (CAS Nr. 022984-54-9 und 034206-40-loder Benzamidosilane wie Bis(N-methylbenzamido)methylethoxysilan (CAS Nr. 16230-35-6) oder Carbamatosilane wie Carbamatomethyltrimethoxysilan. Ebenfalls als Feuchtigkeits-Stabilisatoren geeignet sind die oben genannten Reaktivverdünner, sofern sie ein Molekulargewicht (Mₙ von weniger als etwa 5.000 aufweisen und über Endgruppen verfügen, deren Reaktivität gegenüber eingedrungener Feuchtigkeit mindestens genauso groß, bevorzugt größer ist, als die Reaktivität der reaktiven Gruppen des erfindungsgemäßen Polyurethans.
Die Erfindungsgemäße Zubereitung enthält in der Regel etwa 0 bis etwa 6 Gew.-% Feuchtigkeits-Stabilisatoren.

Die erfindungsgemäße Zubereitung kann weiterhin bis zu etwa 7 Gew.-%, insbesondere etwa 3 bis etwa 5 Gew. % Antioxidantien enthalten.

Die erfindungsgemäße Zubereitung kann weiterhin bis zu etwa 5 Gew.-% Katalysatoren zur Steuerung der Härtungsgeschwindigkeit enthalten. Als Katalysatoren geeignet sind beispielsweise metallorganische Verbindungen wie Eisen- oder Zinnverbindungen geeignet, insbesondere die 1,3-Dicarbonylverbindungen des Eisens oder des 2- bzw. 4-wertige Zinns, insbesondere die Sn(II)-Carboxylate bzw. die Dialkyl-S IV)-Dicarboxylate oder die entsprechenden Dialkoxylate, beispielsweise Dibutylzinndilaurat, Dibutylzinndiacetat, Dioctylzinndiacetat, Dibutylzinnrnaleat, Zinn(II)octoat, Zinn(II)phenolat oder die Acetylacetonate des 2- bzw. 4-wenigen Zinns. Ebenfalls als Katalysatoren verwendet werden können die oben genannten Amine, die bereits bei der Herstellung des erfindungsgemäßen Polyurethans eingesetzt werden können. Weiterhin als Katalysatoren geeignet sind Titanate oder Zirkonate.

Die erfindungsgemäße Zubereitung kann, wenn eine Verwendung als Klebstoff vorgesehen ist, bis zu etwa 30 Gew.-% an üblichen Tackifiern enthalten. Als Tackifier geeignet sind beispielsweise Harze, Terpen-Oligomere, Cumaron-/Inden-Harze, aliphatische, petrochemische Harze und modifizierte Phenolharze.

Die erfindungsgemäße Zubereitung kann bis zu etwa 2 Gew.-%, vorzugsweise etwa 1 Gew.-% an UV-Stabilisatoren enthalten. Als UV-Stabilisatoren besonders geeignet sind die sogenannten Hindered Amine Light Stabilisators (HALS). Es ist im Rahmen der vorliegenden Erfindung bevorzugt, wenn ein UV-Stabilisator eingesetzt wird, der eine Silangruppe trägt und beim Vernetzen bzw. Aushärten in das Endprodukt eingebaut wird. Hierzu besonders geeignet sind die Produkte Lowilite 75 und Lowilite 77 (Fa. Great Lakes, USA).

Eine weitere Ausführungsform der vorliegenden Erfindung ist eine erfindungsgemäße Zubereitung beziehungsweise Zusammensetzung, enthaltend
- 1 Gew.-% bis 15 Gew.-%, beispielsweise 1 Gew.-% bis weniger als 10 Gew.-% eines Bindemittels,
- 20 Gew.-% bis 95 Gew.-% , beispielsweise 20 bis weniger als 80 oder mehr als 80 bis 95 Gew.-% eines Füllstoffs oder eines Gemischs aus zwei oder mehr Füllstoffen.
- 0 Gew.-% bis 70 Gew.-% eines Reaktivverdünners oder eines Gemischs aus zwei oder mehr Reaktivverdünnern,
- 0 Gew.-% bis 30 Gew.-% eines Weichmachers oder eines Gemischs aus zwei oder mehr Weichmachern,
- 0 Gew.-% bis 5 Gew.-% eines Feuchtigkeits-Stabilisators oder eines Gemischs aus zwei oder mehr Feuchtigkeits-Stabilisatoren,
- 0 Gew.-% bis 30 Gew.-% eines Tackifiers oder eines Gemischs aus zwei oder mehr Tackifiern,
- 0 Gew.-% bis 5 Gew.-% eines UV-Stabilisators oder eines Gemischs aus zwei oder mehr UV-Stabilisatoren und
- 0 Gew.-% bis 5 Gew.-% eines Katalysators oder eines Gemischs aus zwei oder mehr Katalysatoren.

Die erfindungsgemäßen Zubereitungen lassen sich prinzipiell durch beliebige dem Fachmann bekannte Verfahren herstellen. Gegenstand der vorliegenden Erfindung ist daher auch ein Verfahren zur Herstellung einer erfindungsgemäßen Zusammensetzung, bei dem mindestens ein Bindemittel und mindestens ein Füllstoff miteinander vermischt werden, wobei als Bindemittel ein mindestens eine Silylgruppe aufweisendes Polyurethan eingesetzt wird, die Menge an Bindemittel in der gesamten Zusammensetzung weniger als 15 Gew.-% beträgt, die Menge an Füllstoffen in der gesamten Zusammensetzung mehr als 20 und weniger als 80 Gew.-% beträgt und das Gewichtsverhältnis von Füllstoff zu Bindemittel mehr als 1,44 : 1 beträgt.

Ebenfalls Gegenstand der Erfindung ist ein Verfahren zur Herstellung einer erfindungsgemäßen Zusammensetzung, bei dem mindestens ein Bindemittel und mindestens ein Füllstoff miteinander vermischt werden, wobei als Bindemittel ein mindestens eine Silylgruppe aufweisendes Polyurethan eingesetzt wird, die Menge an Bindemittel in der gesamten Zusammensetzung weniger als 10 Gew.-% beträgt und die Menge an Füllstoffen in der gesamten Zusammensetzung mehr als 20 bis 95 Gew.-% beträgt.

Vorzugsweise beträgt der Anteil an Füllstoffen mehr als 25 Gew.-% oder das Verhältnis von Füllstoffen zu Bindemittel 1,5:1 bis weniger als 10:1, beispielsweise bis weniger als 8:1, oder der Anteil an Füllstoffen mehr als 25 Gew.-% und das Verhältnis von Füllstoffen zu Bindemittel 1,5:1 bis weniger als 10:1, beispielsweise bis weniger als 8:1.

Die Polyurethane der erfindungsgemäßen Zusammensetzung sowie die erfindungsgemäßen Zubereitungen sind für ein breites Feld von Anwendungen in Bereich der Klebstoffe geeignet. Besonders geeignet sind die erfindungsgemäßen Zubereitungen beispielsweise als Kontaktklebstoff, 1K-Klebstoff, 2K-Klebstoff oder Montageklebstoff. Gegenstand der Erfindung ist daher auch die Verwendung einer erfindungsgemäßen Zusammensetzung als Kontaktklebstoff, 1K-Klebstoff, 2K-Klebstoff oder Montageklebstoff.

Die erfindungsgemäßen Zubereitungen sind beispielsweise als Klebstoff für Kunststoffe, Metalle, Spiegel, Glas, Keramik, mineralische Untergründe, Holz, Leder, Textilien, Papier, Pappe und Gummi geeignet, wobei die Materialien jeweils mit sich selbst oder beliebig untereinander verklebt werden können.

Bei allen oben genannten Anwendungen können die erfindungsgemäßen Zubereitungen als einkomponentige, d.h., mit Luftfeuchtigkeit aushärtende Systeme oder als zweikomponentige Systeme eingesetzt werden, wobei die zweite Komponente beispielsweise Wasser enthält.

Die im Rahmen der vorliegenden Erfindung eingesetzten Zusammensetzungen weisen aufgrund ihres besonders ausgestalteten Verhältnisses von Bindemittel zu Füllstoffen eine für die meisten Anwendungen noch ausgezeichnete Adhäsion und Kohäsion auf, während jedoch in unvorhersehbarer Weise die Ablösbarkeit eines mittels einer derartigen Zusammensetzung befestigten Werkstücks verbessert wird. In der Praxis drückt sich dies dahingehend aus, dass ein mittels einer erfindungsgemäßen Zusammensetzung befestigtes Werkstück mit einem scharfen Gegenstand in der Klebefuge im Klebstoff geschnitten wird und während des Schnittvorgangs ein im Wesentlichen senkrecht zur Verklebungsebene gerichteter Zug ausgeübt wird. Aufgrund der erfindungsgemäßen Anteile der einzelnen Komponenten in der erfindungsgemäßen Zusammensetzung lässt sich so dass verklebte Werkstücke mit nur mäßigem Kraftaufwand von einem entsprechenden Untergrund lösen.

Das Schneiden der Verklebung kann grundsätzlich mit einem beliebigen, entsprechend dimensionierten Instrument erfolgen. Zum Schneiden geeignet sind beispielsweise Spachtel, Fugenmesser, Ceranfeldschaber, Holzspachtel, Kellen, Kunststoffspachtel, weiche Spachtel, Japanspachtel, Ziehdraht und dergleichen.

Vorzugsweise wird das abzutrennende Werkstück leicht angehoben, so dass das zum Schnitt eingesetzte Werkzeug leichter an die Verklebung herangeführt werden kann. Anschließend wird das Werkzeug in den so erzeugten Spalt eingeführt und die Klebstoffschicht möglichst unter dauerndem Zug am Werkstück angeschnitten. Überraschenderweise lässt sich trotz ausgezeichneter Klebkraft bereits nach einem Anschnitt der Verklebung das Werkstück unter geringem Kraftaufwand vom Untergrund lösen.

Klebstoffreste auf porösen Untergründen und Werkstücken können beispielsweise mit einem Spachtel abgezogen werden. An glatten Untergründen (glasierte Fliesen, Glas, Spiegel, Resopal und dergleichen kann der Klebstoff leicht mit einem Ceranfeldschaber entfernt werden. Schlieren lassen sich problemlos mit einem entsprechenden Reinigungsmittel, beispielsweise mit Sidolin oder Pril (beides Firma Henkel KGaA, Düsseldorf), entfernen.

Abgelöste Teile können mit dem gleichen Klebstoff wieder angeklebt werden. Eine vollständige Reinigung des Werkstücks vom Klebstoff ist in diesem Fall nicht notwendig. Klebstoffreste an porösen Untergründen können beispielsweise geschliffen oder überstrichen werden.

Ein weiterer Gegenstand der Erfindung ist ein Verfahren zur reversiblen Verklebung von mindestens einem Objekt und mindestens einem Substrat, bei dem mindestens eine Substratoberfläche oder mindestens eine Objektoberfläche oder mindestens eine Substratoberfläche und mindestens eine Objektoberfläche mit einer erfindungsgemäßen Zusammensetzung oder mit einer nach einem erfindungsgemäßen Verfahren hergestellten Zusammensetzung beschichtet wird und anschließend die beschichtete Substratoberfläche mit einer beschichteten oder unbeschichteten Objektoberfläche oder die beschichtete Objektoberfläche mit einer beschichteten oder unbeschichteten Substratoberfläche in Kontakt gebracht wird.
Die folgenden Beispiele dienen der näheren Erläuterung der Erfindung.

### 1. Erfindungsgemäße Rezeptur mit reduziertem Bindemittelanteil und eingestelltem Verhältnis Bindemittel zu Füllstoff (Alle Angaben in Gewichts-%):

| | | |
|---|---|---|
| 1. | Präpolymer | |
| | (PPG M_{w} 18.000 + γ-Isocyanatopropyltrimethoxysilan) | 9 |
| 2. | Kreide | 55 |
| 3. | Verdicker (Rilanit micro, Fa Cognis) | 5 |
| 4. | Weichmacher (C10-C21 Alkylphenolsulfonsäureester) | 28 |
| 5. | Dibutylzinndilaurat | 0,03 |
| 6. | Haftvermittler (Vinyltrimethoxysilan) | 2 |
| 7. | Haftvermittler (Diaminotrimethoxysilan) | 0,97 |

### Technische Daten:

| | | |
|---|---|---|
| Bruchdehnung (DIN 53 504) | | 70% |
| Zugscherfestigkeit (DIN EN 205 A Holz/Holz) | | 2,7 N/mm² |
| Ziehdraht | (Stahl, gedreht mit 3 Einzeldrähten, | |
| | Durchmesser 0,85 mm) | 9 N/mm |
| Hautbildung (23 °C, 50% relative Feuchte) | | 15 min |
| Verarbeitbarkeit (ISO 9048) | | 500 g/min |
| Dichte (Erichsen Becher) | | 1,8 g /cm³ |

### 2. Vergleichsrezeptur (Alle Angaben in Gewichts-%):

| | | |
|---|---|---|
| 1. | Präpolymer | |
| | (PPG M_{w} 18.000 + γ-Isocyanatopropyltrimethoxysilan) | 27 |
| 2. | Kreide | 37 |
| 3. | Verdicker (Rilanit micro, Fa. Cognis) | 5 |
| 4. | Weichmacher (Mesamoll, Fa. Bayer AG) | 28 |
| 5. | Dibutylzinndilaurat | 0,03 |
| 6. | Haftvermittler (VTMO, Fa. Witco) | 2 |
| 7. | Haftvermittler (DAMO, Fa. Witco) | 0,97 |

### Technische Daten:

| | | |
|---|---|---|
| Bruchdehnung (DIN 53 504) | | 280% |
| Zugscherfestigkeit (DIN EN 205 A Holz/Holz) | | 4,7 N/mm² |
| Ziehdraht | (Stahl, gedreht mit 3 Einzeldrähten, | |
| | Durchmesser 0,85 mm) | 27 N/mm |
| Hautbildung (23 °C, 50% relative Feuchte) | | 20 min |
| Verarbeitbarkeit (ISO 9048) | | 500 g/min |
| Dichte (Erichsen Becher) | | 1,4 g/cm³ |

Bei der Ziehdrahtprobe wird ein Draht mit den oben angegebenen Eigenschaften an eine Klebefuge angelegt und in Richtung der Verklebung um 90° abgelenkt. Anschließend wird die Kraft gemessen, mit der sich der Draht durch die Klebefuge ziehen lässt. Die Angabe erfolgt in N pro mm Breite der Klebefuge. Angenommen wird eine übliche Verklebung mit einer Dicke von etwa 0,9 mm.

## Patentansprüche

1. Zusammensetzung, mindestens enthaltend ein Bindemittel und einen Füllstoff, wobei ein Bindemittel eingesetzt wird, das durch Umsetzung von mindestens zwei Komponenten B und C herstellbar ist, wobei
a) als Komponente B ein Polyol oder ein Gemisch aus zwei oder mehr Polyolen und
b) als Komponente C eine Verbindung der allgemeinen Formel II 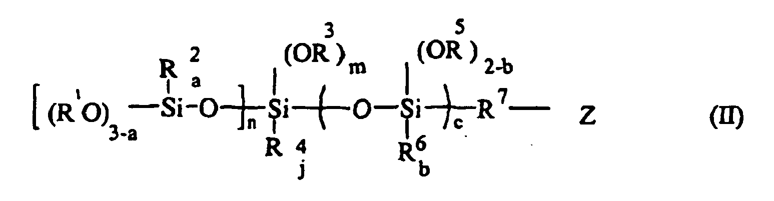 worin die Reste R¹ bis R⁶ jeweils unabhängig voneinander für einen linearen oder verzweigten, gesättigten oder ungesättigten Kohlenwasserstoffrest mit 1 bis 24 C-Atomen, einen gesättigten oder ungesättigten Cycloalkylrest mit 4 bis 24 C-Atomen oder einen Arylrest mit 6 bis 24 C-Atomen stehen, n, m und j jeweils für eine ganze Zahl von 0 bis 3 stehen, wobei m+n+j=3, a für eine ganze Zahl von 0 bis 3, b für eine ganze Zahl von 0 bis 2 und c für eine Zahl von 0 bis 8 steht, R⁷ für einen gegebenenfalls substituierten Alkylenrest mit 1 bis 44 C-Atomen, einen gegebenenfalls substituierten Cycloalkenylrest mit 6 bis 24 C-Atomen oder einen gegebenenfalls substituierten Arylenrest mit 6 bis 24 C-Atomen und Z für NCO steht,
eingesetzt wird, die Menge an Bindemittel in der gesamten Zusammensetzung weniger als 15 Gew.-% beträgt, die Menge an Füllstoffen in der gesamten Zusammensetzung mehr als 20 und weniger als 80 Gew.-% oder mehr als 80 bis 95 Gew.-% beträgt und das Gewichtsverhältnis von Füllstoff zu Bindemittel mehr als 1,44 : 1 beträgt.

2. Zusammensetzung, mindestens enthaltend ein Bindemittel und einen Füllstoff, wobei ein Bindemittel eingesetzt wird, das durch Umsetzung von mindestens zwei Komponenten B und C herstellbar ist, wobei
a) als Komponente B ein Polyol oder ein Gemisch aus zwei oder mehr Polyolen und
b) als Komponente C eine Verbindung der allgemeinen Formel II 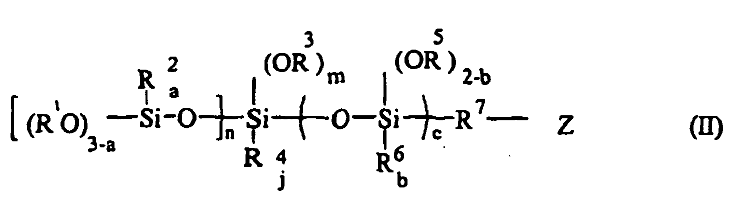 worin die Reste R¹ bis R⁶ jeweils unabhängig voneinander für einen linearen oder verzweigten, gesättigten oder ungesättigten Kohlenwasserstoffrest mit 1 bis 24 C-Atomen, einen gesättigten oder ungesättigten Cycloalkylrest mit 4 bis 24 C-Atomen oder einen Arylrest mit 6 bis 24 C-Atomen stehen, n, m und j jeweils für eine ganze Zahl von 0 bis 3 stehen, wobei m+n+j=3, a für eine ganze Zahl von 0 bis 3, b für eine ganze Zahl von 0 bis 2 und c für eine Zahl von 0 bis 8 steht, R⁷ für einen gegebenenfalls substituierten Alkylenrest mit 1 bis 44 C-Atomen, einen gegebenenfalls substituierten Cycloalkenylrest mit 6 bis 24 C-Atomen oder einen gegebenenfalls substituierten Arylenrest mit 6 bis 24 C-Atomen und Z für NCO steht,
eingesetzt wird, die Menge an Bindemittel in der gesamten Zusammensetzung weniger als 10 Gew.-% beträgt und die Menge an Füllstoffen in der gesamten Zusammensetzung mehr als 20 bis 95 Gew.-% beträgt.

3. Zusammensetzung nach Anspruch 1 oder 2, **dadurch gekennzeichnet, dass** das Bindemittel eine Viskosität von 10.000 bis 300.000 mPas (Brookfield RVT, 23°C, Spindel 7, 2,5 U/min aufweist.

4. Zusammensetzung einem der Ansprüche 1 bis 3, **dadurch gekennzeichnet, dass** der Anteil an Füllstoffen mehr als 25 Gew.-% beträgt.

5. Zusammensetzung nach einem der Ansprüche 1 bis 4, **dadurch gekennzeichnet, dass** das Verhältnis von Füllstoffen zu Bindemittel 1,5:1 bis weniger als 10:1 beträgt.

6. Zusammensetzung nach einem der Ansprüche 1 bis 5, **dadurch gekennzeichnet, dass** sie
- 1 Gew.-% bis 15 Gew.-% eines Bindemittels,
- 20 bis weniger als 80 oder mehr als 80 bis 95 Gew.-% eines Füllstoffs oder eines Gemischs aus zwei oder mehr Füllstoffen,
- 0 Gew.-% bis etwa 70 Gew.-% eines Reaktivverdünners oder eines Gemischs aus zwei oder mehr Reaktivverdünnern,
- 0 Gew.-% bis etwa 30 Gew.-% eines Weichmachers oder eines Gemischs aus zwei oder mehr Weichmachern,
- 0 Gew.-% bis 5 Gew.-% eines Feuchtigkeits-Stabilisators oder eines Gemischs aus zwei oder mehr Feuchtigkeits-Stabilisatoren,
- 0 Gew.-% bis 30 Gew.-% eines Tackifiers oder eines Gemischs aus zwei oder mehr Tackifiern,
- 0 Gew.-% bis 5 Gew.-% eines UV-Stabilisators oder eines Gemischs aus zwei oder mehr UV-Stabilisatoren und
- 0 Gew.-% bis 5 Gew.-% eines Katalysators oder eines Gemischs aus zwei oder mehr Katalysatoren
enthält.

7. Zusammensetzung nach einem der Ansprüche 1 bis 5, **dadurch gekennzeichnet, dass** sie
- 1 Gew.-% bis weniger als 10 Gew.-% eines Bindemittels,
- 20 bis 95 Gew.-% eines Füllstoffs oder eines Gemischs aus zwei oder mehr Füllstoffen,
- 0 Gew.-% bis 70 Gew.-% eines Reaktivverdünners oder eines Gemischs aus zwei oder mehr Reaktivverdünnern,
- 0 Gew.-% bis 30 Gew.-% eines Weichmachers oder eines Gemischs aus zwei oder mehr Weichmachern,
- 0 Gew.-% bis 5 Gew.-% eines Feuchtigkeits-Stabilisators oder eines Gemischs aus zwei oder mehr Feuchtigkeits-Stabilisatoren,
- 0 Gew.-% bis 30 Gew.-% eines Tackifiers oder eines Gemischs aus zwei oder mehr Tackifiern,
- 0 Gew.-% bis 5 Gew.-% eines UV-Stabilisators oder eines Gemischs aus zwei oder mehr UV-Stabilisatoren und
- 0 Gew.-% bis 5 Gew.-% eines Katalysators oder eines Gemischs aus zwei oder mehr Katalysatoren
enthält.

8. Verfahren zur Herstellung einer Zusammensetzung gemäß einem der Ansprüche 1 bis 7, bei dem mindestens ein Bindemittel und mindestens ein Füllstoff miteinander vermischt werden, wobei als Bindemittel ein mindestens eine Silylgruppe aufweisendes Polyurethan eingesetzt wird, die Menge an Bindemittel in der gesamten Zusammensetzung weniger als 15 Gew.-% beträgt, die Menge an Füllstoffen in der gesamten Zusammensetzung mehr als 20 und weniger als 80 Gew.-% oder mehr als 80 bis 95 Gew.-% beträgt und das Gewichtsverhältnis von Füllstoff zu Bindemittel mehr als 1,44 : 1 beträgt.

9. Verfahren zur Herstellung einer Zusammensetzung gemäß einem der Ansprüche 1 bis 7, bei dem mindestens ein Bindemittel und mindestens ein Füllstoff miteinander vermischt werden, wobei als Bindemittel ein mindestens eine Silylgruppe aufweisendes Polyurethan eingesetzt wird, die Menge an Bindemittel in der gesamten Zusammensetzung weniger als 10 Gew.-% beträgt und die Menge an Füllstoffen in der gesamten Zusammensetzung mehr als 20 bis 95 Gew.-% beträgt.

10. Verfahren nach Anspruch 8 oder 9, **dadurch gekennzeichnet, dass**
- der Anteil an Füllstoffen mehr als 25 Gew.-% beträgt oder
- das Verhältnis von Füllstoffen zu Bindemittel 1,5:1 bis weniger als 10:1 beträgt oder
- der Anteil an Füllstoffen mehr als 25 Gew.-% beträgt und das Verhältnis von Füllstoffen zu Bindemittel 1,5:1 bis weniger als 10:1 beträgt.

11. Verwendung einer Zusammensetzung, mindestens enthaltend ein Bindemittel und einen Füllstoff, wobei als Bindemittel ein mindestens eine Silylgruppe aufweisendes Polyurethan enthalten ist, die Menge an Bindemittel in der gesamten Zusammensetzung weniger als 15 Gew.-% beträgt, die Menge an Füllstoffen in der gesamten Zusammensetzung mehr als 20 und weniger als 80 Gew.-% beträgt und das Gewichtsverhältnis von Füllstoff zu Bindemittel mehr als 1,44:1 beträgt, als wiederablösbarer Klebstoff.

12. Verwendung einer Zusammensetzung nach Anspruch 11, wobei als Bindemittel ein Polyurethan eingesetzt wird, das durch Umsetzung von mindestens drei Komponenten A, B und C herstellbar ist, wobei
a) als Komponente A ein Polyisocyanat oder ein Gemisch aus zwei oder mehr Polyisocyanaten und
b) als Komponente B ein Polyol oder ein Gemisch aus zwei oder mehr Polyolen und
c) als Komponente C eine Verbindung der allgemeinen Formel II 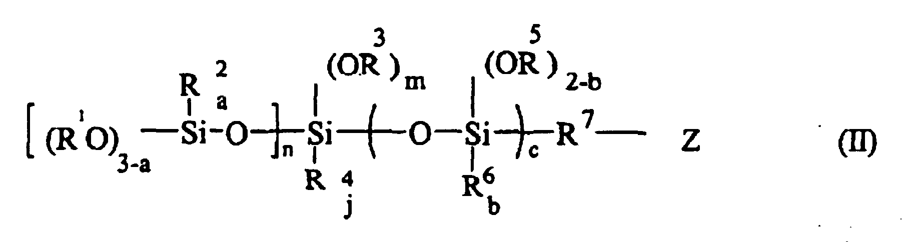 Reste R¹ bis R⁶ jeweils unabhängig voneinander für einen linearen oder verzweigten, gesättigten oder ungesättigten Kohlenwasserstoffrest mit 1 bis 24 C-Atomen, einen gesättigten oder ungesättigten Cycloalkylrest mit 4 bis 24 C-Atomen oder einen Arylrest mit 6 bis 24 C-Atomen stehen, n, m und j jeweils für eine ganze Zahl von 0 bis 3 stehen, wobei m+n+j=3, a für eine ganze Zahl von 0 bis 3, b für eine ganze Zahl von 0 bis 2 und c für eine Zahl von 0 bis 8 steht, R⁷ für einen gegebenenfalls substituierten Alkylenrest mit 1 bis 44 C-Atomen, einen gegebenenfalls substituierten Cycloalkenylrest mit 6 bis 24 C-Atomen oder einen gegebenenfalls substituierten Arylenrest mit 6 bis 24 C-Atomen und Z für NCO, NH₂, NHR¹, OH, SH oder COOH steht,
eingesetzt wird.

13. Verwendung einer Zusammensetzung nach Anspruch 11, wobei als Bindemittel ein Polyurethan eingesetzt wird, das durch Umsetzung von mindestens zwei Komponenten B und C herstellbar ist, wobei
a) als Komponente B ein Polyol oder ein Gemisch aus zwei oder mehr Polyolen und
b) als Komponente C eine Verbindung der allgemeinen Formel II 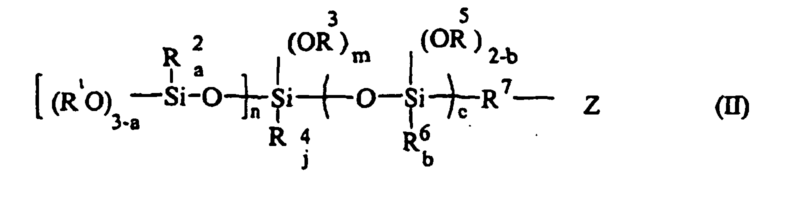 worin die Reste R¹ bis R⁶ jeweils unabhängig voneinander für einen linearen oder verzweigten, gesättigten oder ungesättigten Kohlenwasserstoffrest mit 1 bis 24 C-Atomen, einen gesättigten oder ungesättigten Cycloalkylrest mit 4 bis 24 C-Atomen oder einen Arylrest mit 6 bis 24 C-Atomen stehen, n, m und j jeweils für eine ganze Zahl von 0 bis 3 stehen, wobei m+n+j=3, a für eine ganze Zahl von 0 bis 3, b für eine ganze Zahl von 0 bis 2 und c für eine Zahl von 0 bis 8 steht, R⁷ für einen gegebenenfalls substituiertenAlkylenrest mit 1 bis 44 C-Atomen, einen gegebenenfalls substitutierten Cycloalkenylrest mit 6 bis 24 C-Atomen oder einen gegebenenfalls substituierten Arylenrest mit 6 bis 24 C-Atomen und Z für NCO steht,
eingesetzt wird.

14. Verfahren zur reversiblen Verklebung von mindestens einem Objekt und mindestens einem Substrat, bei dem mindestens eine Substratoberfläche oder mindestens eine Objektoberfläche oder mindestens eine Substratoberfläche und mindestens eine Objektoberfläche mit einer Zusammensetzung gemäß einem der Ansprüche 1 bis 7 oder mit einer nach Anspruch 8 bis 10 hergestellten Zusammensetzung beschichtet wird und anschließend die beschichtete Substratoberfläche mit einer beschichteten oder unbeschichteten Objektoberfläche oder die beschichtete Objektoberfläche mit einer beschichteten oder unbeschichteten Substratoberfläche in Kontakt gebracht wird.

## Claims

1. A composition, containing at least one binder and one filler, wherein a binder is applied, which may be prepared by reaction of at least two components B and C, wherein
a) a polyol of a mixture of two or more polyols is applied as component B and
b) as component C, is applied a compound of general formula II 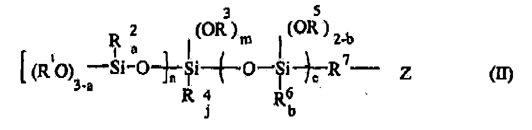 wherein the radicals R¹ to R⁶ each represent independent of each other, a linear or branched, saturated or unsaturated hydrocarbon radical with 1 to 24 C atoms, a saturated or unsaturated cycloalkyl radical with 4 to 24 C atoms or an aryl radical with 6 to 24 C atoms, n, m and j each represents an integer from 0 to 3, wherein m+n+j=3, a represents an integer from 0 to 3, b represents an integer from 0 to 2, and c represents a number from 0 to 8, R⁷ represents an optionally substituted alkylene radical with 1 to 44 C atoms, an optionally substituted cycloalkenyl radical with 6 to 24 C atoms or an optionally substituted arylene radical with 6 to 24 C atoms and Z represents NCO,
the amount of binders in the total composition is less than 15% by weight, the amount of fillers in the total composition is more than 20 and less than 80% by weight or more than 80 to 95% by weight and the weight ratio of filler to binder is greater than 1.44:1.

2. A composition containing at least one binder and one filler, wherein a binder is applied, which may be prepared by reaction of at least two components B and C, wherein
a) a polyol of a mixture of two or more polyols is applied as component B and
b) as component C, is applied a compound of general formula II 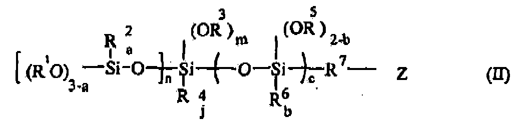 wherein the radicals R¹ to R⁶ each represent independent of each other, a linear or branched, saturated or unsaturated hydrocarbon radical with 1 to 24 C atoms, a saturated or unsaturated cycloalkyl radical with 4 to 24 C atoms or an aryl radical with 6 to 24 C atoms, n, m and j each represents an integer from 0 to 3, wherein m+n+j=3, a represents an integer from 0 to 3, b represents an integer from 0 to 2, and c represents a number from 0 to 8, R⁷ represents an optionally substituted alkylene radical with 1 to 44 C atoms, an optionally substituted cycloalkenyl radical with 6 to 24 C atoms or an optionally substituted arylene radical with 6 to 24 C atoms and Z represents NCO.
the amount of binders in the total composition is less than 10% by weight and the amount of fillers in the total composition is more than 20 to 95% by weight.

3. The composition according to claim 1 or 2, **characterized in that** the binder has a viscosity from 10,000 to 300,000 mPa.s (Brookfield RVT, 23°C, spindle 7, 2.5 rpm).

4. The composition according to any of claims 1 to 3, **characterized in that** the proportion of fillers is more than 25% by weight.

5. The composition according to any of claims 1 to 4, **characterized in that** the ratio of fillers to binders is 1.5:1 to less than 10:1.

6. The composition according to any of claims 1 to 5, **characterized in that** it contains
- 1 % by weight to 15% by weight of a binder.
- 20 to less than 80 or more than 80 to 95% by weight of a filler or a mixture of two or more fillers,
- 0% by weight to about 70% by weight of a reactive diluent or a mixture of two or more reactive diluents,
- 0% by weight to about 30% by weight of plasticizer or a mixture of two or more plasticizers,
- 0% by weight to 5% by weight of a humidity stabilizer or a mixture of two or more humidity stabilizers,
- 0% by weight to 30% by weight of a tackifier or a mixture of two or more tackifiers,
- 0% by weight to 5% by weight of a UV stabilizer or a mixture of two or more UV stabilizers, and
- 0% by weight to 5% by weight of a catalyst or a mixture of two or more catalysts.

7. The composition according to any of claims 1 to 5, **characterized in that** it contains
- 1% by weight to less than 10% by weight of a binder,
- 20 to 95% by weight of a filler or a mixture of two or more fillers,
- 0% by weight to 70% by weight of a reactive diluent or a mixture of two or more reactive diluents,
- 0% by weight to 30% by weight of a plasticizer or a mixture of two or more plasticizers,
- 0% by weight to 5% by weight of a humidity stabilizer or a mixture of two or more humidity stabilizers,
- 0% by weight to 30% by weight of a tackifier or a mixture of two or more tackifiers,
- 0% by weight to 5% by weight of a UV stabilizer or a mixture of two or more UV stabilizers, and
- 0% by weight to 5% by weight of a catalyst or a mixture of two or more catalysts.

8. A method for preparing a composition according to any of claims 1 to 7, in which at least one binder and at least one filler are mixed together, wherein a polyurethane having at least one silyl group is applied as a binder, the amount of binders in the total composition is less than 15% by weight, the amount of fillers in the total composition is more than 20 and less than 80% by weight or more than 80 to 95% by weight and the weight ratio of filler to binder is greater than 1.44:1.

9. A method for preparing a composition according to any of claims 1 to 7, in which at least one binder and at least one filler are mixed together, wherein a polyurethane having at least one silyl group is applied as a binder, the amount of binders in the total composition is less than 10% by weight and the amount of fillers in the total composition is more than 20 to 95% by weight.

10. The method according to claim 8 or 9, **characterized in that**
- the proportion of fillers is more than 25% by weight or
- the ratio of fillers to binders is 1.5:1 to less than 10:1 or
- the proportion of fillers is more than 25% by weight and the ratio of fillers to binders is 1.5:1 to less than 10:1.

11. The use of a composition containing at least one binder and one filler, wherein a polyurethane having at least one silyl group is contained as a binder, the amount of binders in the total composition is less than 15% by weight, the amount of fillers in the total composition is more than 20 and less than 80% by weight and the weight ratio of filler to binder is more than 1.44:1, as a removable adhesive.

12. The use of a composition according to claim 11, wherein a polyurethane is applied as a binder, which may be prepared by reaction of at least three components A, B and C, wherein
a) a polyisocyanate or a mixture of two or more polyisocyanates is applied as component A and
b) a polyol or a mixture of two or more polyols is applied as component B, and
c) as component C, is applied a compound of general formula II 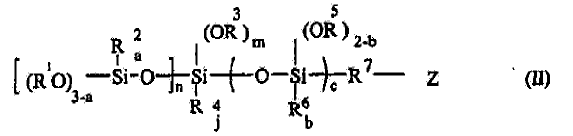 wherein the radicals R¹ to R⁶ each represent independently of each other a linear or branched, saturated or unsaturated hydrocarbon radical with 1 to 24 C atoms, a saturated or unsaturated cycloalkyl radical with 4 to 24 C atoms or an aryl radical with 6 to 24 C atoms, n, m and j each represents an integer from 0 to 3, wherein m+n+j=3, a represents an integer from 0 to 3, b an integer from 0 to 2 and c a number from 0 to 8, R⁷ represents an optionally substituted alkylene radical with 1 to 44 C atoms, an optionally substituted cycloalkenyl radical with 6 to 24 C atoms or an optionally substituted arylene radical with 6 to 24 C atoms and Z represents NCO, NH₂, NHR¹, OH, SH or COOH.

13. The use of a composition according to claim 11, wherein a polyurethane is applied as a binder, which may be prepared by reaction of at least two components B and C, wherein
a) a polyol or a mixture of two or more polyols is applied as component B and
b) as component C is applied a compound of general formula II 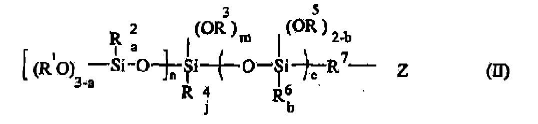 wherein the radicals R¹ to R⁶ each represent independent of each other, a linear or branched, saturated or unsaturated hydrocarbon radical with 1 to 24 C atoms, a saturated or unsaturated cycloalkyl radical with 4 to 24 C atoms or an aryl radical with 6 to 24 C atoms, n, m and j each represents an integer from 0 to 3, wherein m+n+j=3, a represents an integer from 0 to 3, b represents an integer from 0 to 2, and c represents a number from 0 to 8, R⁷ represents an optionally substituted alkylene radical with 1 to 44 C atoms, an optionally substituted cycloalkenyl radical with 6 to 24 C atoms or an optionally substituted arylene radical with 6 to 24 C atoms and Z represents NCO.

14. A method for reversible adhesion of at least one object and of at least one substrate, in which at least one substrate surface or at least one object surface or at least one substrate surface and at least one object surface is coated with a composition according to any of claims 1 to 7 or with a composition being prepared according to claims 8 to 10 and subsequently the coated substrate surface is brought into contact with a coated or uncoated object surface or the coated object surface is brought into contact with a coated or uncoated substrate surface.

## Revendications

1. Composition contenant au moins un liant et une charge, le liant mis en oeuvre pouvant être obtenu par mise en réaction d'au moins deux composants B et C,
a) un polyol ou un mélange de deux polyols ou plus étant mis en oeuvre à titre de composant B ; et
b) un composé répondant à la formule générale II 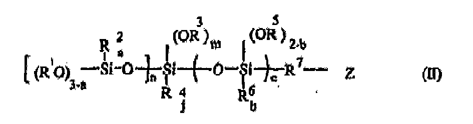 dans laquelle les radicaux R¹ à R⁶ représentent, chacun indépendamment l'un de l'autre, un radical d'hydrocarbure linéaire ou ramifié, saturé ou insaturé contenant de 1 à 24 atomes de carbone, un radical cycloalkyle saturé ou insaturé contenant de 4 à 24 atomes de carbone ou un radical aryle contenant de 6 à 24 atomes de carbone, n, m et j représentent respectivement un nombre entier de 0 à 3, m+n+j = 3, a représente un nombre entier de 0 à 3, b représente un nombre entier de 0 à 2, et c représente un nombre de 0 à 8, R⁷ représente un radical alkylène le cas échéant substitué, contenant de 1 à 44 atomes de carbone, un radical cycloalcényle le cas échéant substitué contenant de 6 à 24 atomes de carbone ou un radical arylène le cas échéant substitué contenant de 6 à 24 atomes de carbone, et Z représente un groupe NCO, étant mis en oeuvre à titre de composant C,
la quantité de liants dans la composition totale étant inférieure à 15 % en poids, la quantité de charges dans la composition totale étant supérieure à 20 et inférieure à 80 % en poids, ou allant d'une valeur supérieure à 80
jusqu'à 95 % en poids, et le rapport pondéral de la charge au liant étant supérieur à 1,44 : 1.

2. Composition contenant au moins un liant et une charge, le liant mis en oeuvre pouvant être obtenu par mise en réaction d'au moins deux composants B et C,
a) un polyol ou un mélange de deux polyols ou plus étant mis en oeuvre à titre de composant B ; et
b) un composé répondant à la formule générale II 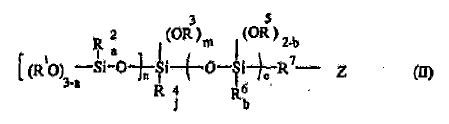 dans laquelle les radicaux R¹ à R⁶ représentent, chacun indépendamment l'un de l'autre, un radical d'hydrocarbure linéaire ou ramifié, saturé ou insaturé contenant de 1 à 24 atomes de carbone, un radical cycloalkyle saturé ou insaturé contenant de 4 à 24 atomes de carbone ou un radical aryle contenant de 6 à 24 atomes de carbone, n, m et j représentent respectivement un nombre entier de 0 à 3, m+n+j = 3, a représente un nombre entier de 0 à 3, b représente un nombre entier de 0 à 2, et c représente un nombre de 0 à 8, R⁷ représente un radical alkylène le cas échéant substitué, contenant de 1 à 44 atomes de carbone, un radical cycloalcényle le cas échéant substitué contenant de 6 à 24 atomes de carbone ou un radical arylène le cas échéant substitué contenant de 6 à 24 atomes de carbone, et Z représente un groupe NCO, étant mis en oeuvre à titre de composant C,
la quantité de liants dans la composition totale étant inférieure à 10 % en poids, et la quantité de charges dans la composition totale allant d'une valeur supérieure à 20 jusqu'à 95 % en poids.

3. Composition selon la revendication 1 ou 2, **caractérisée en ce que** le liant présente une viscosité de 10.000 à 300.000 mPA.s (Brookfield RVT, 23 °C, broche 7, 2,5 tours/minute).

4. Composition selon l'une quelconque des revendications 1 à 3, **caractérisée en ce que** la fraction des charges est supérieure à 25 % en poids.

5. Composition selon l'une quelconque des revendications 1 à 4, **caractérisée en ce que** le rapport des charges aux liants s'élève de 1,5 : 1 à moins de 10 : 1.

6. Composition selon l'une quelconque des revendications 1 à 5, **caractérisée en ce qu'**elle contient :
- un liant à concurrence de 1 % en poids à 15 % en poids ;
- une charge ou un mélange de deux charges ou plus à concurrence de 20 à moins de 80 ou de plus de 80 à 95 % en poids ;
- un diluant réactif ou un mélange de deux diluants réactifs ou plus à concurrence de 0 % en poids à environ 70 % en poids ;
- un plastifiant ou un mélange de deux plastifiants ou plus à concurrence de 0 % en poids à environ 30 % en poids ;
- un stabilisateur contre l'humidité ou un mélange de deux stabilisateurs contre l'humidité ou plus à concurrence de 0 % en poids à 5 % en poids ;
- un agent poisseux ou un mélange de deux agents poisseux ou plus à concurrence de 0 % en poids à 30 % en poids ;
- un stabilisateur contre le rayonnement ultraviolet ou un mélange de deux stabilisateurs ou plus contre le rayonnement ultraviolet à concurrence de 0 % en poids à 5 % en poids ; et
- un catalyseur ou un mélange de deux catalyseurs ou plus à concurrence de 0 % en poids à 5 % en poids.

7. Composition selon l'une quelconque des revendications 1 à 5, **caractérisée en ce qu'**elle contient :
- un liant à concurrence de 1 % en poids à moins de 10 % en poids ;
- une charge ou un mélange de deux charges ou plus à concurrence de 20 à 95 % en poids ;
- un diluant réactif ou un mélange de deux diluants réactifs ou plus à concurrence de 0 % en poids à 70 % en poids ;
- un plastifiant ou un mélange de deux plastifiants ou plus à concurrence de 0 % en poids à 30 % en poids ;
- un stabilisateur contre l'humidité ou un mélange de deux stabilisateurs contre l'humidité ou plus à concurrence de 0 % en poids à 5 % en poids ;
- un agent poisseux ou un mélange de deux agents poisseux ou plus à concurrence de 0 % en poids à 30 % en poids ;
- un stabilisateur contre le rayonnement ultraviolet ou un mélange de deux stabilisateurs ou plus contre le rayonnement ultraviolet à concurrence de 0 % en poids à 5 % en poids ; et
- un catalyseur ou un mélange de deux catalyseurs ou plus à concurrence de 0 % en poids à 5 % en poids.

8. Procédé pour la préparation d'une composition selon l'une quelconque des revendications 1 à 7, dans lequel on mélange au moins un liant et au moins une charge, dans lequel on met en oeuvre à titre de liant un polyuréthane présentant au moins un groupe silyle, la quantité de liants dans la composition totale étant inférieure à 15 % en poids, la quantité de charges dans la composition totale étant supérieure à 20 et inférieure à 80 % en poids ou allant d'une valeur supérieure à 80 jusqu'à 95 % en poids, et le rapport pondéral de la charge au liant étant supérieur à 1,44 : 1.

9. Procédé pour la préparation d'une composition selon l'une quelconque des revendications 1 à 7, dans lequel on mélange au moins un liant et au moins une charge, dans lequel on met en oeuvre à titre de liant un polyuréthane présentant au moins un groupe silyle, la quantité de liants dans la composition totale étant inférieure à 10 % en poids et la quantité de charges dans la composition totale allant d'une valeur supérieure à 20 jusqu'à 95 % en poids.

10. Procédé selon la revendication 8 ou 9, **caractérisé en ce que**
- la fraction des charges est supérieure à 25 % en poids ; ou
- le rapport des charges aux liants s'élève de 1,5 : 1 à moins de 10 : 1 ou
- la fraction des charges est supérieure à 25 % en poids et le rapport des charges aux liants s'élève de 1,5 : 1 à moins de 10 : 1.

11. Utilisation d'une composition contenant au moins un liant et une charge, ladite composition contenant, à titre de liant, un polyuréthane présentant au moins un groupe silyle, la quantité de liants dans la composition totale étant inférieure à 15 % en poids, la quantité de charges dans la composition totale étant supérieure à 20 et inférieure à 80 % en poids et le rapport pondéral de la charge au liant étant supérieur à 1,44 : 1, comme adhésif enlevable.

12. Utilisation d'une composition selon la revendication 11, dans laquelle on met en oeuvre à titre de liant un polyuréthane que l'on peut préparer par mise en réaction d'au moins trois composants A, B et C,
a) un polyisocyanate ou un mélange de deux polyisocyanates ou plus étant mis en oeuvre à titre de composant A ;
b) un polyol ou un mélange de deux polyols ou plus étant mis en oeuvre à titre de composant B ; et
c) un composé répondant à la formule générale Il 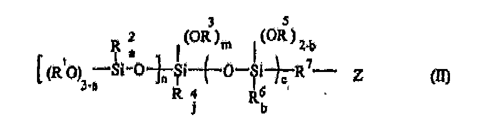 dans laquelle les radicaux R¹ à R⁶ représentent, chacun indépendamment l'un de l'autre, un radical d'hydrocarbure linéaire ou ramifié, saturé ou insaturé contenant de 1 à 24 atomes de carbone, un radical cycloalkyle saturé ou insaturé contenant de 4 à 24 atomes de carbone ou un radical aryle contenant de 6 à 24 atomes de carbone, n, m et j représentent respectivement un nombre entier de 0 à 3, m+n+j = 3, a représente un nombre entier de 0 à 3, b représente un nombre entier de 0 à 2, et c représente un nombre de 0 à 8, R⁷ représente un radical alkylène le cas échéant substitué, contenant de 1 à 44 atomes de carbone, un radical cycloalcényle le cas échéant substitué contenant de 6 à 24 atomes de carbone ou un radical arylène le cas échéant substitué contenant de 6 à 24 atomes de carbone, et Z représente un groupe NCO, un groupe NH₂, un groupe NHR¹, un groupe OH, un groupe SH ou un groupe COOH, étant mis en oeuvre à titre de composant C.

13. Utilisation d'une composition selon la revendication 11, dans laquelle on met en oeuvre à titre de liant un polyuréthane que l'on peut préparer par mise en réaction d'au moins deux composants B et C,
a) un polyol ou un mélange de deux polyols ou plus étant mis en oeuvre à titre de composant B ; et
b) un composé répondant à la formule générale II 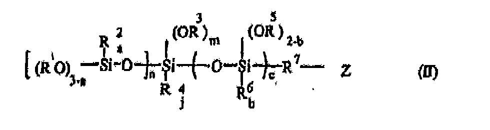 dans laquelle les radicaux R¹ à R⁶ représentent, chacun indépendamment l'un de l'autre, un radical d'hydrocarbure linéaire ou ramifié, saturé ou insaturé contenant de 1 à 24 atomes de carbone, un radical cycloalkyle saturé ou insaturé contenant de 4 à 24 atomes de carbone ou un radical aryle contenant de 6 à 24 atomes de carbone, n, m et j représentent respectivement un nombre entier de 0 à 3, m+n+j = 3, a représente un nombre entier de 0 à 3, b représente un nombre entier de 0 à 2, et c représente un nombre de 0 à 8, R⁷ représente un radical alkylène le cas échéant substitué, contenant de 1 à 44 atomes de carbone, un radical cycloalcényle le cas échéant substitué contenant de 6 à 24 atomes de carbone ou un radical arylène le cas échéant substitué contenant de 6 à 24 atomes de carbone, et Z représente un groupe NCO, étant mis en oeuvre à titre de composant C.

14. Procédé pour le collage réversible d'au moins un objet et d'au moins un substrat, dans lequel on enduit au moins une surface du substrat ou au moins une surface de l'objet ou bien au moins une surface du substrat et au moins une surface de l'objet avec une composition selon l'une quelconque des revendications 1 à 7 ou avec une composition préparée conformément aux revendications 8 à 10, et on met ensuite la surface enduite du substrat en contact avec une surface de l'objet enduite ou non enduite ou bien la surface enduite de l'objet en contact avec une surface enduite ou non enduite du substrat.
